# EUROPEAN PATENT APPLICATION

(11) **EP 4 822 571 A1**
(43) Date of publication of application: **14.10.2026**
(21) Application number: 25227831.2
(22) Date of filing: 31.12.2025
(51) Int. Cl.: G06F 21/60, G06F 21/62, H04L 9/00, H04L 9/40

(54) **SECURE EVENT TRANSFER USING HOMOMORPHIC ENCRYPTION**

(30) Priority: 07.04.2025 US 202563784962 P; 06.08.2025 US 202519292900
(71) Applicant: Samsung Electronics Co., Ltd., Suwon-si, Gyeonggi-do 16677 (KR)
(72) Inventor: GIM, Jongmin, San Jose, CA, 95134 (US); KI, Yang Seok, San Jose, CA, 95134 (US)
(74) Representative: Kuhnen & Wacker Patent- und Rechtsanwaltsbüro PartG mbB

(57) **Abstract**

A device is disclosed. The device may include a connection to a host or a management unit, a media to store a data, and a controller to access the data in the media based at least in part on a request from the host. A buffer may store a correctable event record, which may include fields. Some fields in the correctable event record may be encrypted using a homomorphic encryption, HE, algorithm and an encryption key.

## Description

### FIELD

The disclosure relates generally to devices, and more particularly to securely retrieving information that have occurred on the device.

### BACKGROUND

Devices, such as storage devices, may experience events, such as errors accessing data. When such error occur, the devices may store error records. Such error records may include information regarding the address in the device where the error occurred. Systems may use such error records to make predictions regarding what addresses in the device might have future errors.

A need remains to secure information in the event records to reduce security risks.

### SUMMARY

Embodiments of the invention are set out in the appended claims. A device may include a connection to machines. The device may include a buffer to store a correctable event record, which may be encrypted. A management unit may use the encrypted correctable event record to make predictions about events in the device.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 shows a machine with a device capable of generating correctable event records, according to embodiments of the disclosure.
FIG. 2 shows details of the machine of FIG. 1, according to embodiments of the disclosure.
FIG. 3 shows the device of FIG. 1 connected to various machines and the server of FIG. 1, according to embodiments of the disclosure.
FIG. 4 shows an example of an event record format that may be used in the device of FIG. 1, according to embodiments of the disclosure.
FIG. 5 shows how the correctable event record of FIG. 3 may be generated in the device of FIG. 1, according to embodiments of the disclosure.
FIG. 6 shows how the server of FIG. 1 may use the correctable event record of FIG. 5 in the device of FIG. 1 to predict future events, according to embodiments of the disclosure.
FIG. 7 shows a flowchart of an example procedure for the server of FIG. 1 to predict future events using the correctable event record of FIG. 5, according to embodiments of the disclosure.
FIG. 8 shows an alternate implementation of the device of FIG. 1, according to embodiments of the disclosure.
FIG. 9 shows a flowchart of an example procedure for the device of FIG. 1 to generate the correctable event record of FIG. 5, according to embodiments of the disclosure.
FIG. 10 shows a flowchart of an example procedure for the device of FIG. 1 to store the uncorrectable event record of FIG. 3, according to embodiments of the disclosure.
FIG. 11 shows a flowchart of an example procedure for the device of FIG. 1 to determine that an event has occurred, according to embodiments of the disclosure.
FIG. 12 shows a flowchart of an example procedure for the device of FIG. 1 to share event records with the server of FIG. 1, according to embodiments of the disclosure.
FIG. 13 shows a flowchart of an example procedure for the device of FIG. 1 to process the encrypted address list of FIG. 6 received from the server of FIG. 1, according to embodiments of the disclosure.
FIG. 14A shows a flowchart of an example procedure for the server of FIG. 1 to request and process the correctable event record of FIG. 5 from the device of FIG. 1, according to embodiments of the disclosure.
FIG. 14B continues the flowchart of FIG. 14A of an example procedure for the server of FIG. 1 to request and process the correctable event record of FIG. 5 from the device of FIG. 1, according to embodiments of the disclosure.
FIG. 15A shows a flowchart of an example procedure for the server of FIG. 1 to request and store event records from the device of FIG. 1, according to embodiments of the disclosure.
FIG. 15B continues the flowchart of FIG. 14A of an example procedure for the server of FIG. 1 to request and store event records from the device of FIG. 1, according to embodiments of the disclosure.
FIG. 16 shows a flowchart of an example procedure for the server of FIG. 1 to process the correctable event record of FIG. 5, according to embodiments of the disclosure.
FIG. 17 shows a flowchart of an example procedure for the server of FIG. 1 to update the database of FIG. 6 based on a decrypted address list received from the device of FIG. 1, according to embodiments of the disclosure.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

Devices may be used to store data for host machines. These devices may be, for example, memory devices ,which may use volatile storage, such as Dynamic Random Access Memory (DRAM). But such volatile storage might experience events, such as errors, indicative of problems or potential problems with the volatile storage.

A network including the device with the volatile storage may also include a Reliability, Availability, and Serviceability (RAS) server, which may be responsible for tracking what portions of the device might be faulty. The RAS server may propagate information about such potentially faulty portions to other hosts machines, so that the other host machines do not attempt to use those portions.

The RAS server may also attempt to make predictions about what portions of the device might become faulty in the future. Making such predictions may require information about events that have occurred in the device, particularly events that were corrected internally by the device. But device manufacturers might want to keep the technology in the devices regarding correcting events proprietary, and might not want to release data regarding correctable events.

Embodiments of the disclosure address these problems by encrypting correctable event records using a homomorphic encryption algorithm. By using a homomorphic encryption algorithm, it is possible for the RAS server to attempt to make predictions about the device without having the unencrypted data about the data. The predictions may be made using prediction algorithms that may be modified to use a homomorphic encryption library to perform mathematical operations on the encrypted correctable event records. The result of such predictions may be an encrypted address list of portions of the device that might become faulty. The RAS may then return the encrypted address list to the device, which may decrypt the address list without revealing any proprietary information from the correctable event records.

Embodiments of the disclosure may provide various features. These features may include, for example, a new event record format for homomorphic encryption that may be used for Correctable Error (CE) events. These CE events may be recorded in a device-specific CXL mailbox and may mirror a typical event record, with modifications specific to CE events. At least some, and potentially all, of the event data in the CE events may be encrypted. Encrypting (using, for example, a homomorphic encryption algorithm) may enable protection of sensitive data related to the CE event, and may be performed using a hardware encryption engine.

Encrypted data from CE events may be transmitted to the CXL system RAS management unit. Because sensitive information relating to CE events may be encrypted, sensitive information may remain protected.

The CXL system RAS management unit may use the encrypted event record to predict potential uncorrectable errors in the CXL device. This prediction may be performed using the encrypted CE events, and the results of the prediction, which may remain encrypted, may be returned to the CXL device for decryption. For example, the CXL system RAS management unit may use a get_decrypted Device Physical Address (DPA) Mailbox Command to request the decrypted results of the prediction. This get_decrypted DPA mailbox command may be a vendor-specific command, with an opcode (such as get_decrypted_DPA), a payload in (such as the homomorphic encrypted DPA and possibly an evaluation key), and a payload out (such as a decrypted DPA). The CXL device may perform the decryption using a Homomorphic Encryption (HE) engine using the evaluation key (if provided) to generate and return the decrypted DPA.

The decrypted DPA may be treated by the CXL system RAS management unit as a "Poison List", which may identify memory regions in the CXL device that are flagged as potentially having unrecoverable errors in the near future. The Poison List may then be used to update a Faulty Page List (FPL) maintained by the CXL system RAS management unit, which may in turn be propagated to the hosts of the CXL system. This propagation may help to ensure that all hosts are aware of potentially faulty memory regions and may take appropriate actions, such as isolating or remapping the affected addresses, to prevent further issues or system instability.

### Homomorphic Encryption based CXL system Level RAS

A device vendor-specific CXL mailbox may allow the transfer of sensitive internal device data to a dedicated user, such as a system administrator. Once the data is received, a host may store the data in a database for processing and management. However, storing and processing this sensitive data in the database raises security concerns, as administrators or other authorized users may have access to the raw data, which is parsed from a correctable error (CE) event record format. Despite access controls, this still presents a potential risk of exposing critical internal device information to unauthorized parties.

To mitigate these security risks, embodiments of the disclosure may apply homomorphic encryption (HE) to the CXL system-level RAS architecture. Homomorphic encryption may allow data to be processed and analyzed without the necessity of decrypting it, ensuring that sensitive information remains secure while still enabling valuable operations such as error prediction, monitoring, and system management. Homomorphic encryption is an encryption system that includes the property that operations on the encrypted data are equivalent to operations on the unencrypted data, with the encryption then applied to the result. In equations, homomorphic encryption systems include the property that Op(HE(*u*), HE(*v*)) = HE(Op(u, *v*))*.* Using homomorphic encryption may ensure that, even if the data is stored or transmitted in an encrypted form, the data may still be used for critical RAS operations without the risk of exposing raw device data.

Embodiments of the disclosure may include an event record for homomorphic encryption in a Dynamic Random Access Memory (DRAM). This format may be replicated for use with homomorphic encryption. The key pieces of information for predicting uncorrectable errors include row, column, count, DPA (Device Physical Address), and the overflow counter.

To enhance security, the subject matter disclosed herein may include support for encrypting the DRAM event record format, ensuring that sensitive data remains protected from unauthorized access. The get_ce_event_record format is designed to replicate the structure of a get_event_record buffer, with the key difference being that the get_ce_event_record stores correctable error (CE) events.

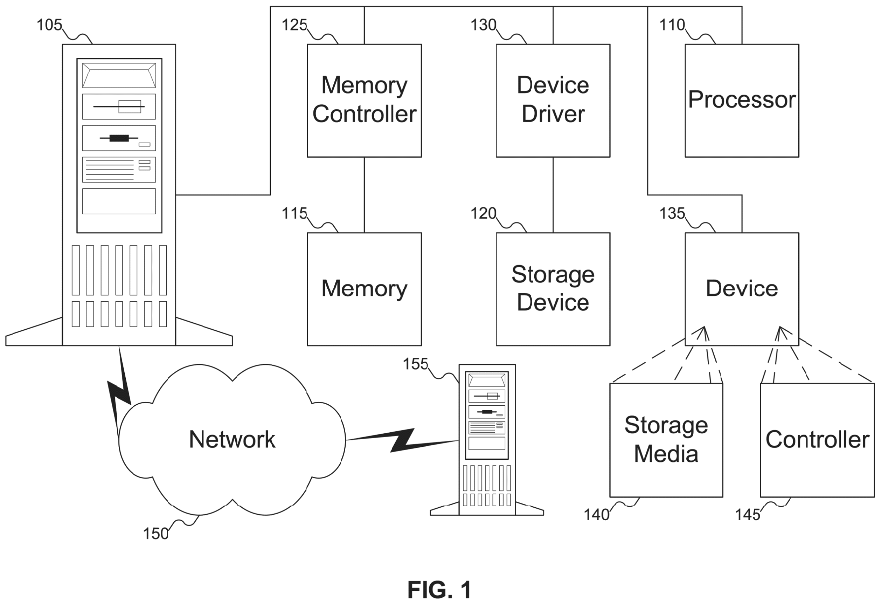

FIG. 1 shows a machine with a device capable of generating correctable event records, according to embodiments of the disclosure. In FIG. 1, machine 105, which may also be termed a host or a system, may include processor 110, memory 115, and storage device 120. While FIG. 1 shows one storage device 120, embodiments of the disclosure may include any number of storage devices 120.

Processor 110, which may also be referred to as a host processor, may be any variety of processor. (Processor 110, along with the other components discussed below, are shown outside the machine for ease of illustration: embodiments of the disclosure may include these components within the machine.) While FIG. 1 shows a single processor 110, machine 105 may include any number (one or more, without bound) of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115, which may also be referred to as a main memory, may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM) etc. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system under which various applications may be running. These applications may issue requests (which may also be termed commands) to read data from or write data to either memory 115 or storage device 120. Whereas memory 115 may be used to store data that is considered "short-term", storage device 120 may be used to store data that is considered "long-term": that is, data that is expected to be retained for longer periods of time and that should be retained in a persistent manner, even if delivery of power to machine 105 should be interrupted. Storage device 120 may be accessed using device driver 130. While FIG. 1 shows one device driver 130 being used to manage access to storage device 120, embodiments of the disclosure may include more than one device driver 130, each used to manage access to different storage devices 120, or a single device driver 130 may be used to manage access to all storage devices 120.

Storage device 120 may be associated with an accelerator. Such an accelerator may be used for, for example, near-data processing. That is, the accelerator may be used to process data closer to storage device 120, to reduce or eliminate transfer of data from storage device 120 into memory 115. The use of an accelerator for near-data processing may also offload processing from processor 110, as the accelerator may perform such processing instead of processor 110. Like processor 105, such an accelerator may implement a Reduced Instruction Set Computer (RISC) architecture or a Complex Instruction Set Computer (CISC) architecture (among other possibilities), and may be implemented, for example, using a Central Processing Unit (CPU), a Field Programmable Gate Array (FPGA), an Application-Specific Integrated Circuit (ASIC), a System-on-a-Chip (SoC), a Graphics Processing Unit (GPU), a General Purpose GPU (GPGPU), a Neural Processing Unit (NPU), or a Tensor Processing Unit (TPU).

The combination of storage device 120 and accelerator may also be referred to as a computational storage device, computational storage unit, computational storage device, or computational device. Storage device 120 and an accelerator may be designed and manufactured as a single integrated unit, or the accelerator may be separate from storage device 120. The phrase "associated with" is intended to cover both a single integrated unit including both a storage device and an accelerator and a storage device that is paired with an accelerator but that are not manufactured as a single integrated unit. In other words, a storage device and an accelerator may be said to be "paired" when they are physically separate devices but are connected in a manner that enables them to communicate with each other. Further, in the remainder of this document, any reference to storage device 120 may be understood to refer to both storage device 120 and the accelerator either as physically separate but paired (and therefore may include the other device) or to both devices integrated into a single component as a computational storage unit.

While FIG. 1 uses the generic term "storage device", embodiments of the disclosure may include any storage device formats that may be associated with computational storage, examples of which may include hard disk drives and Solid State Drives (SSDs). In addition, in systems that include multiple storage devices 120, storage devices 120 may be of the same or different types. For example, one storage device 120 might be an SSD, whereas another storage device 120 might be a hard disk drive. Any reference to a specific type of storage device, such as an "SSD", below should be understood to include such other embodiments of the disclosure.

Processor 110 and storage device 120 may communicate across a fabric (not shown in FIG. 1). This fabric may be any fabric along which information may be passed. Such fabrics may include fabrics that may be internal to machine 105, and which may use interfaces such as Peripheral Component Interconnect Express (PCle), Serial AT Attachment (SATA), or Small Computer Systems Interface (SCSI), among others. Such fabrics may also include fabrics that may be external to machine 105, and which may use interfaces such as Ethernet, Infiniband, or Fibre Channel, among others. In addition, such fabrics may support one or more protocols, such as Non-Volatile Memory Express (NVMe), NVMe over Fabrics (NVMe-oF), Simple Service Discovery Protocol (SSDP), or a cache-coherent interconnect protocol. Thus, such fabrics may be thought of as encompassing both internal and external networking connections, over which commands may be sent, either directly or indirectly, to storage device 120. In embodiments of the disclosure where such fabrics support external networking connections, storage device 120 might be located external to machine 105, and storage device 120 might receive requests from a processor remote from machine 105.

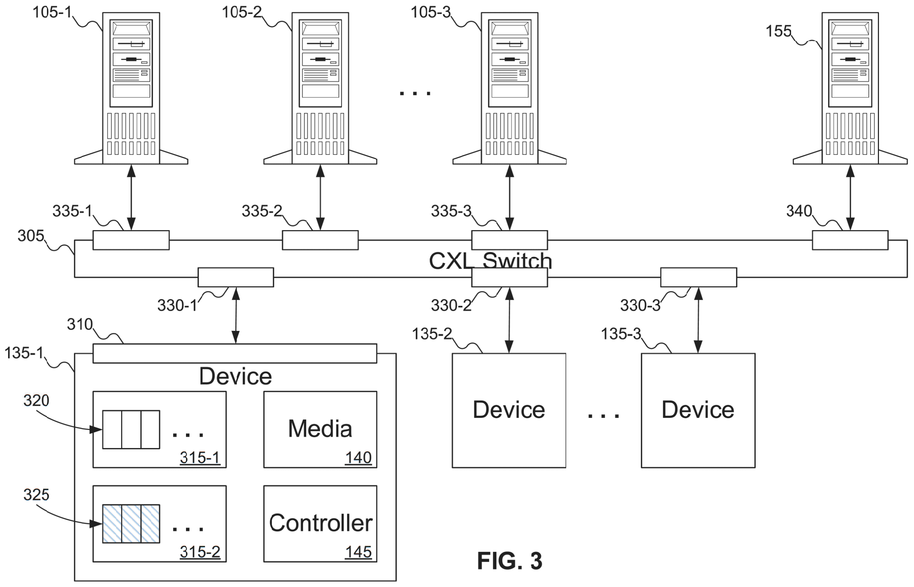

In addition to (or instead of) memory 115 and storage device 120, machine 105 may include device 135. Device 135 may be a device to store data. Although FIG. 1 shows device 135 as being part of machine 105, some embodiments of the disclosure may include device 135 being a standalone device not embodied in any machine. Device 135 may include storage media 140, such as a volatile storage or a non-volatile storage, and controller 145 to manage access to data in the storage media. For example, storage media 140 might be DRAM, in which case controller 145 might be a memory controller (similar to memory controller 125). Or, storage media 140 might be flash storage in which case controller 145 might be a flash media controller (which might include a flash translation layer to map logical addresses used by processor 110 to physical addresses in the flash storage). The details of device 135 are discussed further with reference to FIGs. 3 and 6-8 below.

In some embodiments of the disclosure, device 135 may support a cache-coherent interconnect protocol. In some embodiments of the disclosure, the cache-coherent interconnect protocol may be a Compute Express Link^{®} (CXL^{®}) protocol. (Compute Express Link and CXL are registered trademarks of the Compute Express Link Consortium in the United States.) As such, device 135 may enable access to data using protocols such as the CXL.io, CXL.mem, and/or CXL.cache protocols. For example, device 135 might be accessed solely using the CXL.mem protocol, with 135 presenting the entirety of its address space as though it was a form of memory 115.

One benefit of device 135 using the CXL protocol for communication is that the CXL protocol may support a mailbox feature. Device 135 may implement a mailbox, which may be, for example, a vendor-specific mailbox, that may support the retrieval of event records, such as correctable or uncorrectable event records.

In some embodiments of the disclosure, device 135 may support asynchronous storage access; in other embodiments of the disclosure, device 135 may support synchronous storage access, although supporting synchronous storage access may require some modifications to how storage is accessed within device 135. For example, while memory may be accessed using the CXL protocols asynchronously, other forms of memory, such as Double Data Rate 5 (DDR5) memory may be synchronous memory.

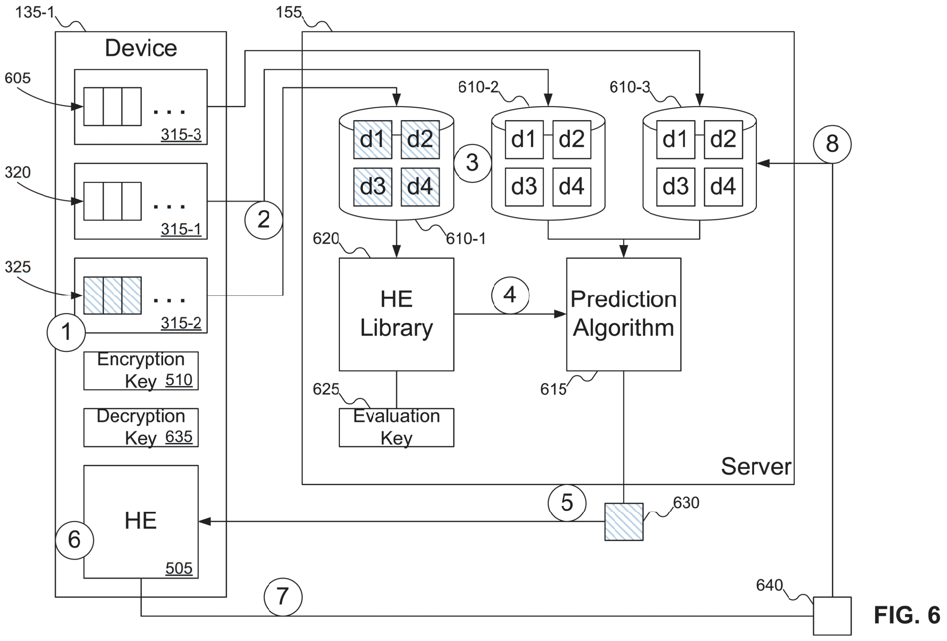

Machine 105 (or device 135, in embodiments of the disclosure where device 135 is a standalone device separate from machine 105) may be connected to network 150. Also connected to network 150 may be other machines like machine 105 (not shown in FIG. 1), and server 155. Server 155 may be, for example, a reliability, availability, and serviceability (RAS) server. Server 155 may, among other functions, attempt to make predictions about addresses in device 135 that might be subject to events in the future, such as errors. Server 155 may also be referred to as a RAS server, a management unit, or a RAS management unit; in some embodiments of the disclosure, the term "management unit" may also be used to refer to the software or hardware in server 155 that implements the reliability, availability, and serviceability functions of server 155. Server 155 is discussed further with reference to FIG. 6 below.

CXL is a high-speed, low-latency, open standard interconnect technology that may be used to provide efficient communication between a CPU and one or more connected devices, such as accelerators, memory expansion devices, or other hardware. For example, the one or more connected devices may be built on a PCIe physical layer. PCle is a high-speed interface standard that may be used to connect various internal components in a computer system, such as graphics cards, network cards, storage controllers, and/or other devices.

CXL may improve performance and efficiency in data-intensive applications by creating a unified memory space and allowing devices to access each other's memory directly, minimizing CPU involvement and data movement. CXL may maintain memory coherency between the CPU and the one or more connected devices, ensuring that each of the one or more devices and the CPU all see the same data. CXL may provide for an efficient sharing of resources, such as memory, between the CPU and the connected devices, leading to higher performance and reduced software stack complexity.

Embodiments of the disclosure relate to secure Compute-Express Link (CXL) event transfers using homomorphic encryption to provide system-level RAS in a CXL pooling architecture. RAS is directed to the design and implementation of features that enhance the robustness of a system, such that the system remains operational, downtime is minimized, and maintenance is easy to perform. System-level RAS may implement measures to prevent hardware faults from occurring, and may design systems that may detect and remove faults. Mechanisms may be provided to detect, correct, and recover from errors without disrupting system operation. Data integrity measures may be used to provide data accuracy and consistency, even in the face of errors or failures. Predictive maintenance may implement features that allow for proactive identification and replacement of failing components, reducing unplanned downtime.

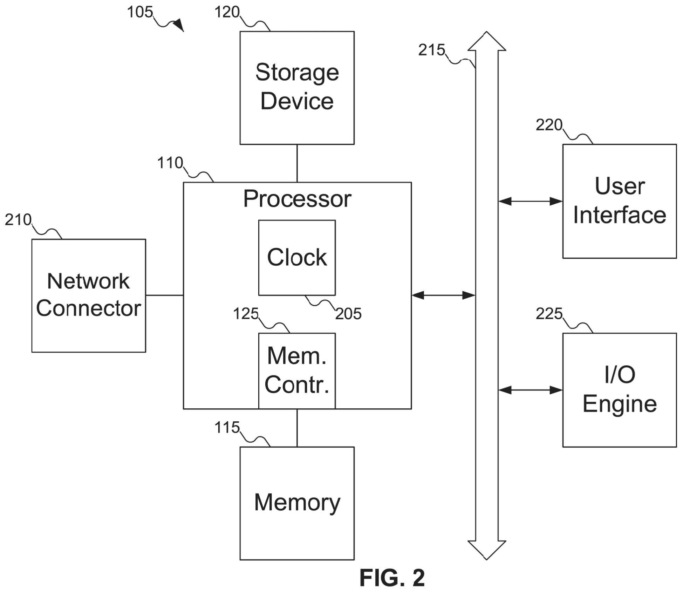

FIG. 2 shows details of machine 105 of FIG. 1, according to embodiments of the disclosure. In FIG. 2, typically, machine 105 includes one or more processors 110, which may include memory controllers 125 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to storage device 120, and to network connector 210, which may be, for example, an Ethernet connector or a wireless connector. Processors 110 may also be connected to buses 215, to which may be attached user interfaces 220 and Input/Output (I/O) interface ports that may be managed using I/O engines 225, among other components.

FIG. 3 shows device 135-1 of FIG. 1 connected to various machines 105 and server 155 of FIG. 1, according to embodiments of the disclosure. In FIG. 3, device 135-1 is one of several devices 135-1, 135-2, and 135-3 shown to be part of the overall system. While FIG. 3 shows more detail about device 135-1, devices 135-2 and 135-3 may be similarly designed and may include similar elements as device 135-1. Devices 135-1, 135-2, and 135-3 may be referred to collectively as devices 135.

FIG. 3 shows devices 135 connected to switch 305. To support such communication, device 135-1 may include connection 310. Connection 310 may be, for example, any sort of interface to connect device 135-1 with switch 305. For example, connection 310 might be an Ethernet port. Or, connection 310 might be an edge connector, designed to fit into an appropriate slot in switch 305. Embodiments of the disclosure may support any desired form for connection 310.

Device 135-1 may also include buffers 315-1 and 315-2, each of which may be used to store event records. For example, buffer 315-1 may store uncorrectable event records 320, and buffer 315-2 may store correctable event records 325 (buffers 315-1 and 315-2 may be referred to collectively as buffers 315). It might happen that at some point in time, device 135-1 might have more than one event record: for example, device 135-1 might have multiple uncorrectable event records 320 and/or multiple correctable event records 325. In such situations, buffers 315 might store lists of uncorrectable event records 320 and/or correctable event records 325. While not shown in FIG. 3, device 135-1 may also include an additional buffer to store a poison list. A poison list is defined as a list of addresses that have been marked as subject to events and that, in some embodiments of the disclosure, should not be used to store data for machines 105.

Switch 305 is shown as a CXL switch. As discussed with reference to FIG. 1 above, there may be advantages to using a cache-coherent interconnect protocol such as a CXL protocol: switch 305 may therefore support the use of such protocols. As a particular example, if switch 305 is a CXL switch, switch 305 may support access to a mailbox, such as a vendor-specific mailbox, in devices 135.

Switch 305 may include its own connector 330-1, which may enable communication with device 135-1. Connector 330-1 may be of an appropriate type to correspond with connector 310. Thus, if connector 310 is a CXL port, connector 330-1 may also be a CXL port which may be connected using a CXL extended cable or device, such as Mini Cool Edge Input/Output (MCIO), Quad Small Form-factor Pluggable (QSFP), QSFP Double Density (QSFP-DD), or Open Compute Project Network Interface Card (OCP NIC) 3.0, so that device 135-1 and switch 305 may communicate. Such cables or devices may communicate using CXL protocols (which may be transmitted over PCle). Or, if connector 310 is an edge connector, connector 330-1 may be a slot into which edge connector 310 may fit. Like connector 310, connector 330-1 may take any designed form. Switch 305 may also have connectors 330-2 and 330-3 to support connections to devices 135-2 and 135-3. Connectors 330-1, 330-2, and 330-3 may be referred to collectively as connectors 330.

Switch 305 may also include connection 335-1, 335-2, and 335-3, which may be referred to collectively as connections 335, to machines 105-1, 105-2, and 105-3, which may be referred to collectively as machines 105. (In FIG. 3, in contrast to FIG. 1, device 135 is portrayed as being a standalone device rather than part of machine 105, hence the separate connections to switch 305. But device 135 might also be part of another machine 105.) Connections 335 may be any desired form of connector. For example, if machines 105 communicate with switch 305 using Ethernet links, then connections 335 may be Ethernet connections. Embodiments of the disclosure may also support any other desired form of connections.

While FIG. 3 shows switch 305 connected to three devices 135 and three machines 105, embodiments of the disclosure may support any number (one or more) of devices 135 and any number (one or more) of machines 105. Further, the number of devices 135 may differ from the number of machines 105. Finally, while each machine 105 and each device 135 might support the same type of connections to switch 305, embodiments of the disclosure may support mixing connection types as desired. Thus, connections 330 and connections 335 may all be the same or different types of connections, in any desired combination.

In addition, switch 305 may include connection 340 to enable a connection with server 155. While FIG. 3 uses a different reference number to show connection 340 to server 155 than connections 335 to machines 105, it should be understood that FIG. 3 is simply attempting to show that server 155 may be different from machines 105, or that connection 340 is different from connections 335. Thus, connection 340, like connections 335, may take any desired form.

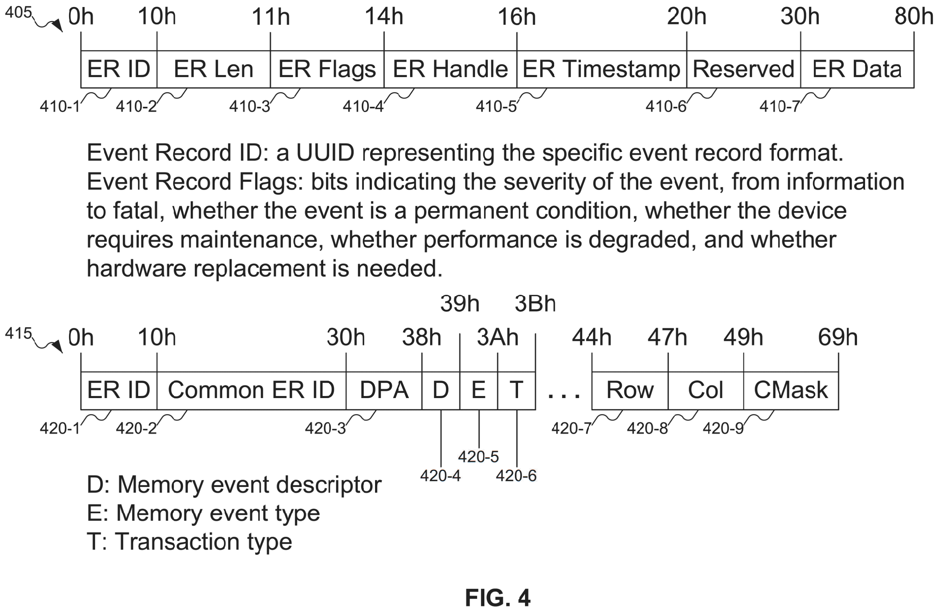

As discussed above, devices 135 may generate uncorrectable event records 320 and correctable event records 325. As the names imply, these event records may reflect events that have occurred in device 135 and that may be uncorrectable or correctable. These records may take various forms. FIG. 4 illustrates an example record format that may be used by devices 135.

FIG. 4 shows an example of an event record format that may be used in device 135 of FIG. 1, according to embodiments of the disclosure. In FIG. 4, event record 405 is shown. Event record 405 may be a general event record, which may include various fields 410-1 through 410-7 (which may be referred to collectively as fields 410). For example, field 410 may be an event identifier (ID), which may include a universally unique ID (UUID) specific to that event record format. By checking field 410, a system (such as server 155 of FIG. 1) may be able to determine how to interpret the remaining data in event record 405.

Other fields may also contain other information of relevance. For example, field 410-2 may specify how long the event record is, field 410-3 may include bits that specify information about the event, such as its severity (from informational to fatal), its permanence, whether the device requires maintenance, and whether any hardware in the device requires replacement, field 410-4 may include a handle that identifies the event in another manner, field 410-5 may specify the time at which the event occurred, and field 410-7 may include various data about the event.

Note that each field 410 may include its own length. For example field 410-1 may be 16 bytes long (note that the dividers between fields are labeled using hexadecimal boundaries), field 410-2 may be 1 byte long, field 410-3 may be 3 bytes long, and so on.

On the other hand, FIG. 4 also shows event record 415. Event record 415 may represent a particular type of event record, specific to a DRAM event. Event record 415 may include fields similar to those of event record 405, but may also include other fields specific to a DRAM event. Thus, for example, field 420-1 may be similar to field 410-1, but other fields 420-2 through 420-9 may be unique to event record 415. For example, a DRAM memory event may include fields such as field 420-3, which may specify the device physical address where the error occurred, field 420-4, which may specify a descriptor of the memory event, field 420-5, which may specify an event type for the memory event, and field 420-6, which may specify a transaction type for the memory event.

As with event record 405, each field 420 in event record 415 may include its own length. For example field 420-1 may be 16 bytes long (again, the dividers between fields are labeled using hexadecimal boundaries), field 420-2 may be 32 bytes long, field 420-3 may be 8 bytes long, and so on.

Event record 415 may also include information about how the device attempted to correct the event, if the event was correctable. For example, if the event included a misread of some data from an address in the DRAM of the device that was corrected using some error correcting code implemented in the device, this information may be included in event record 415.

But if event record 415 is correctable event record 325 of FIG. 3, and event record 415 includes information about how the device corrects for the event, then event record 415 might reveal some information that the manufacturer of the device might want to keep secret. If event record 415 was then released without encryption, the vendor might be releasing some secrets.

One solution would be to only release uncorrectable event records 320 of FIG. 3: that is, not to release correctable event records 325 of FIG. 3. But as uncorrectable event records 320 of FIG. 3 only provide information about events that are not correctable, it is unlikely that uncorrectable event records 320 of FIG. 3 may be enough for server 155 of FIG. 1 to make any predictions about where future events might occur.

Embodiments of the disclosure may enable the release of correctable event records 325 of FIG. 3 by encrypting them. Any encryption algorithm that enables mathematical manipulation of the data in event records 405 and 415 and eventual decoding the encrypted records may be used. A homomorphic encryption algorithm is an example of a type of encryption algorithm that enables such mathematical manipulation and eventual decoding, but any other encryption algorithm that enables the data to be successfully decoded after mathematical manipulation, may be used. In the discussion below, any reference to a homomorphic encryption algorithm may be understood to also reference any non-homomorphic encryption algorithm that enables decoding after mathematical manipulation.

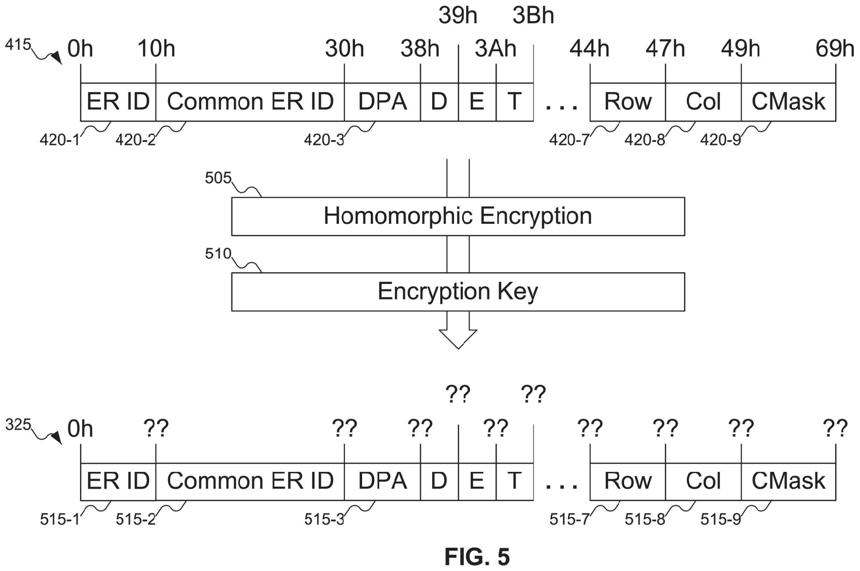

FIG. 5 shows how correctable event record 325 of FIG. 3 may be generated in device 135 of FIG. 1, according to embodiments of the disclosure. In FIG. 5, event record 415 is shown being encrypted using homomorphic encryption 505, which may generate correctable event record 325. Homomorphic encryption 505 is an encryption algorithm wherein mathematical manipulation of data is not affected by the encryption. Thus, for example, if *f*(*x*) is some mathematical operator on xand *g*(*x*) is a homomorphic encryption algorithm, then *f*(*g*(*x*)) *= g*(*f*(*x*))*.* Put in words, the mathematical operation on data that is encrypted using a homomorphic encryption algorithm is equal to the homomorphic encryption of the mathematical operation on the unencrypted data.

As with any encryption algorithm, a homomorphic encryption algorithm may use encryption key 510 to encrypt the data. Thus, without the appropriate decryption key (which may be encryption key 510 if homomorphic encryption 505 is a symmetric homomorphic encryption algorithm, or a separate key if homomorphic encryption 505 is an asymmetric homomorphic encryption algorithm), it may not be possible to recover the original data in correctable event record 325. Encryption key 510 may be local to device 135: that is, encryption key 510 may be used solely by device 135, and not shared with any other device 135, machines 105 of FIG. 1, or server 155 of FIG. 1.

Correctable event record 325 may include fields 515-1 through 515-9, which may be referred to collectively as fields 515. (Fields 515-4, 515-5, and 515-6 are not labeled due to room in FIG. 5, but may be understood to be included in correctable event record 325.

Note that homomorphic encryption 505 might result in fields of different length than those in event record 415. For example, while field 420-1 might be 16 bytes long, there is no guarantee that field 515-1 is 16 bytes long. In fact, the length of each field 515 may vary from that of fields 420 from prior to encryption.

It is also worth noting that fields 420 may be encrypted individually, rather than encrypting the entirety of event record 415. In this manner, it is possible to leave some fields 515 in correctable event record 325 unencrypted. For example, event record ID 420-1 may be a UUID identifying the type of event: encrypting this value might result in an incorrect identifier after mathematical manipulation. Provided that individual fields 420 do not contain any data that the manufacturer of device 135 of FIG. 1 wants to keep secret, such fields 515 may be left unencrypted, with only the important fields encrypted. So, for example, field 515-1 might be left unencrypted, but field 515-3 might be encrypted.

Embodiments of the disclosure may include an example of a procedure that may be performed by an online UE prediction module in the CXL management system. In this example, the CXL management system may function as an RAS system management unit. The module utilizes three key databases as inputs for UE prediction, depending on the selected algorithm:
1. HE CE Database (HE CE DB) - May store homomorphically encrypted correctable error data.
2. Poison List Database (Poison List DB) - May contain a list of poisoned DPA identified from poison_list, and previous error predictions.
3. Event Record Database (Event Record DB) - May hold the accumulated non-sensitive event data for further analysis and prediction.

In this exemplary architecture, UE prediction may be centralized within the CXL RAS management unit, meaning that no UE prediction is performed on the host side. All prediction and error management tasks may be handled at the system level, ensuring consistency and security in error detection and handling across the entire system.

Embodiments of the disclosure may include an example of an HE-based CXL management system. In this exemplary architecture, the CXL management system may function as an RAS system management unit. One or more CXL devices may be equipped with HE hardware engines, and may support two event record types via CXL mailbox interfaces: get_event_record and get_ce_event_record. CE events may be encrypted and decrypted by the HE hardware engine before being delivered to the RAS system management unit. In some examples, the CXL management system may be used to implement a memory pooling architecture.

FIG. 6 shows how server 155 of FIG. 1 may use correctable event record 325 of FIG. 5 in device 135 of FIG. 1 to predict future events, according to embodiments of the disclosure. In FIG. 6, device 135 is shown as including buffers 315-1, 315-2, and 315-3, which may store, respectively, uncorrectable event record 320, correctable event record 325 (which may be encrypted as discussed with reference to FIG. 5 above), and poison list 605. Correctable event record 325 is shown crosshatched to reflect that correctable event record 325 (either in whole or in part) is encrypted; uncorrectable event record 320 and poison list 605 may be unencrypted, since there may be no data to protect in them. The encryption of correctable event record 325, using homomorphic encryption 505 and encryption key 510, may be performed as step 1 (shown as circle 1 in FIG. 6).

As step 2, device 135 may provide uncorrectable event records 320, correctable event records 325, and poison lists 605 to server 155. Server 155 may include a receiver (not shown in FIG. 6) to receive uncorrectable event records 320, correctable event records 325, and poison lists 605 from device 135. Because correctable event records 325 may be encrypted, correctable event records 325 may be secure against being captured by someone intercepting any data transmitted from device 135 to server 155. For example, device 135 may support a mailbox that may be used to request information from buffers 315 in device 135. Device 135 might use multiple different mailboxes to support access to uncorrectable event records 320, correctable event records 325, and poison lists 605. For example, one mailbox might be used to provide access to uncorrectable event records 320 and poison lists 605 (as these data are not encrypted), but might use a different, vendor-specific mailbox to provide access to correctable event records 325.

At step 3, server 155 may store uncorrectable event records 320, correctable event records 325, and poison lists 605 in databases 610-1, 610-2, and 610-3 (which may be referred to collectively as databases 610). Note that databases 610 may store information for multiple devices 135 (such as devices 135-1, 135-2, and 135-3 of FIG. 3). Thus, d1 may be data from a first device 135, d2 may be data from a second device 135, d3 may be data from a third device 135, and d4 may be data from a fourth device 135. While FIG. 6 shows databases 610 as storing data for four devices 135, embodiments of the disclosure may include databases 610 storing information for any number (one or more) of devices 135. In addition, while FIG. 6 shows a single server 155 operating on the data from devices 135, embodiments of the disclosure may include two or more servers 155, which may operate either collectively to process the data from devices 135 or separately (with each server 155 processing data from different devices 155).

Note that while FIG. 6 shows three separate databases for uncorrectable event records 320, correctable event records 325, and poison lists 605, embodiments of the disclosure may store uncorrectable event records 320, correctable event records 325, and poison lists 605 all in a single database 610, rather than storing each in a separate database. Also, note that correctable event record 325 is stored in database 610-1 in an encrypted form, as server 155 may not have access to encryption key 510 used by device 135 to encrypt correctable event record 325.

At step 4, server 155 may process information from databases 610 to make predictions for uncorrectable error pages 320 regarding future events that might occur in devices 135. That is, server 155 may attempt to identify pages in device 135 that are not currently subject to errors, but that are likely to be subject to errors in the future (either near-term or long-term). By making such predictions, server 155 (and machines 105 of FIG. 1) may be able to avoid using pages that are likely to experience errors in the future, which avoids potential data loss from storing data that might not be recoverable after an error occurs. Server 155 may use prediction algorithm 615 to make such predictions: prediction algorithm 615 may be implemented in any desired manner, and may use, for example, methods such as logarithmic base, column/row analysis, machine learning (ML), or large language models (LLM), among other possibilities, all of which are covered by embodiments of the disclosure. Note that in some embodiments of the disclosure, prediction algorithm 615 might operate on all data in databases 610; in other embodiments of the disclosure, prediction algorithm 615 might operate only on data from a single device 135 (as events in one device 135 might be unlikely to impact events in another device 135). For example, prediction algorithm 615 might be trained using uncorrectable event records 320 from database 610-2 (and potentially also using poison lists 605 from database 610-3) to enable predictions of future uncorrectable errors in device 135 based on correctable event records 325 from database 610-1.

Although server 155 is described as including prediction algorithm 615, which suggests that prediction algorithm 615 is software, embodiments of the disclosure may also include hardware implementations of prediction algorithm. For example, where prediction algorithm 615 uses ML or LLMs, hardware implementations may be more efficient than software implementations executing on a general purpose processor. Thus, prediction algorithm 615 may be implemented using, among other possible examples, a CPU, an FPGA, an ASIC, an SoC, a GPU, a GPGPU, an NPU, or a TPU.

While prediction algorithm 615 may use uncorrectable event records 320 and poison lists 605 without concern (as they are unencrypted), prediction algorithm 615 might need to use HE library 620 to manipulate data from correctable event record 325. Further, server 155 may additionally encrypt correctable event records 325 using evaluation key 625 to further safeguard the data against potential attacks.

As a result of the operation of prediction algorithm 615, address list 630 may be generated. Address list 630 may be, for example, a device physical address (DPA) list. But because the device physical addresses would likely have been encrypted as part of correctable event records 325, address list 630 may be considered to store encrypted data. Thus, at step 5, server 155 may send encrypted address list 630 to device 135. (Recall that encryption key 510 is local to device 135: therefore, server 155 does not know encryption key 510 and is not able to decrypt address list 630 by itself.) Server 155 may include a transmitter (not shown in FIG. 6) to send encrypted address list 630 to device 135. In embodiments of the disclosure where server 155 further encrypts correctable event records 325 using evaluation key 625, server 155 may also provide evaluation key 625 to device 135, so that device 135 may completely decrypt address list 630. Server 155 may use a mailbox of device 135 to deliver this information.

At step 6, device 135 may decrypt address list 630. Device 135 may use HE 505 and either encryption key 510 or decryption key 635, depending on whether HE 505 is a symmetric or asymmetric encryption algorithm, to accomplish this decryption. If server 155 also used evaluation key 625 to further encrypt correctable event records 325, then device 135 may also use evaluation key 625 to complete the decryption of address list 630. After decryption, device 135 may generate decrypted address list 640.

At step 7, device 135 may provide decrypted address list 640 to server 155. Server 155 may include a receiver (not shown in FIG. 6) to receive decrypted address list 640 from device 135. As with uncorrectable event records 320, correctable event records 325, and poison lists 605 to server 155, device 135 may include a mailbox from which server 155 may request decrypted address list 640 from device 135.

Finally, at step 8, server 155 may store the addresses in decrypted address list 640 in database 610-3, updating poison list 605 for device 135 based on decrypted address list 640.

While not shown in FIG. 6, server 155 may also share decrypted address list 640 with machines 105 of FIG. 1, so that machines 105 of FIG. 1 may avoid attempting to access addresses known or expected to be faulty in devices 135.

Embodiments of the disclosure may include an example of a program flow for HE-based data transfer. The following outlines the example steps, including updating events, performing Unrecoverable/Uncorrectable Error (UE) prediction, and updating the decrypted DPA list.
1. A CXL Mailbox may maintain three buffers: a buffer for a poison list, a buffer for event records, and a buffer for CE (Correctable Error) records. If an event is a DRAM-related event and a CE error, a corresponding DRAM CE event record may be stored in an encrypted format. Encryption may be performed by an HE hardware engine.
2. The poison list and event records are transferred as plain text, while the CE records are transferred in encrypted HE format. The encryption key used to encrypt sensitive data in the CE records is not shared with the host.
3. The poison list, event records, and CE records may be stored in a database of a CXL management system.
4. For UE prediction, a UE prediction algorithm module may retrieve relevant data from the database.
5. For processing HE data, an HE library may be used. The library generates an evaluation key to safeguard against potential attacks while processing the UE prediction and ensuring data security.
6. The UE prediction algorithm may utilize various methods, including any of logarithmic base, column/row analysis, machine learning (ML), large language models (LLM), etc. Calculations involving both HE data and plain text may be performed by the HE library, which then generates an encrypted DPA (Data Protection Algorithm) list.
7. A UE prediction result from the UE prediction algorithm (illustratively in the form of an encrypted DPA list, along with an evaluation key) may be transferred to a CXL device. The HE hardware engine may decrypt the DPA list using both the decryption key and the evaluation key. This occurs via a device-specific CXL mailbox (get_DPA_list, payload in).
8. The decrypted DPA list may then be returned to the CXL management system in plain text. This is done through a device-specific CXL mailbox (get_DPA_list, payload out).
9. The DPA list may be obtained.
10. The DPA list may be used as the poison list and is stored in the database of the CXL management system.

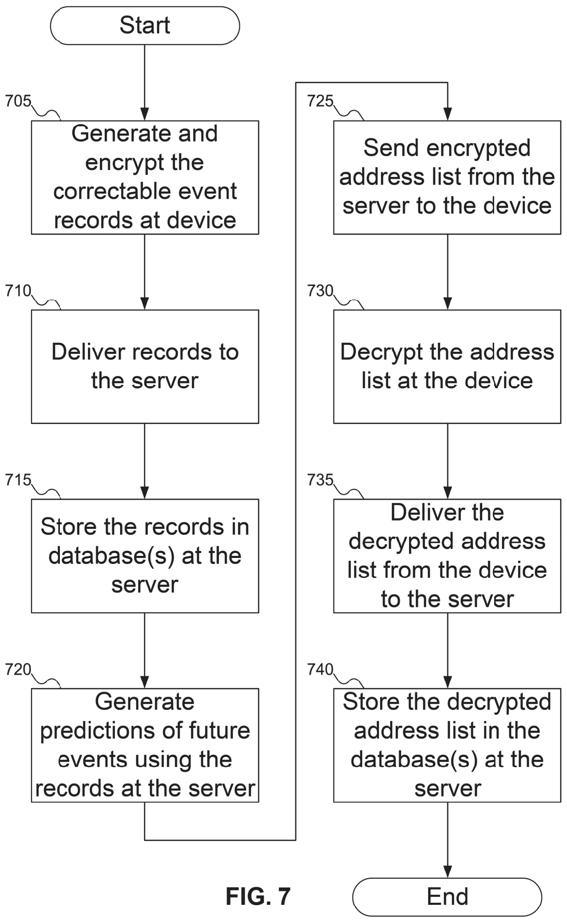

FIG. 7 shows a flowchart of an example procedure for the server of FIG. 1 to predict future events using the correctable event record of FIG. 5, according to embodiments of the disclosure. FIG. 7 shows a flowchart corresponding to the steps illustrated in FIG. 6. At block 705, corresponding to step 1 of FIG. 6, device 135 of FIG. 1 may generate and encrypt correctable event records 325 of FIG. 3. Device 135 of FIG. 1 may also generate uncorrectable event records 320, and poison list 605 of FIG. 6. Note that uncorrectable event records 320 and poison list 605 of FIG. 6 might not be encrypted (although they could also be encrypted, if desired). At block 710, corresponding to step 2 of FIG. 6, device 135 of FIG. 1 may deliver correctable event records 325 of FIG. 3, uncorrectable event records 320, and/or poison list 605 of FIG. 6 to server 155 of FIG. 1. For example, device 135 of FIG. 1 may store correctable event records 325 of FIG. 3, uncorrectable event records 320, and/or poison list 605 of FIG. 6 in queues 315 of FIG. 3, which may then be dequeued by requests from server 155 of FIG. 1.

At block 715, corresponding to step 3 of FIG. 6, server 155 of FIG. 1 may store correctable event records 325 of FIG. 3, uncorrectable event records 320, and/or poison list 605 of FIG. 6 in databases 610 of FIG. 6. At block 720, corresponding to step 4 of FIG. 6, server 155 of FIG. 1 may use prediction algorithm 615 and HE library 620 of FIG. 6 to generate predictions of future events using correctable event records 325 of FIG. 3, uncorrectable event records 320, and/or poison list 605 of FIG. 6. Server 155 of FIG. 1 may also use evaluation key 625 of FIG. 6, which may provide additional security against potential attacks. The generated predictions of future events may include encrypted address list 630 of FIG. 6.

At block 725, corresponding to step 5 of FIG. 6, server 155 of FIG. 1 may send encrypted address list 630 of FIG. 6 to device 135 of FIG. 1. If server 155 of FIG. 1 also used evaluation key 625 of FIG. 6 in conjunction with HE library 620 of FIG. 6, then at block 725 server 155 of FIG. 1 may also send evaluation key 625 of FIG. 6 to device 135 of FIG. 1. At block 730, corresponding to step 6 of FIG. 6, device 135 of FIG. 1 may use HE 505, and either encryption key 510 or decryption key 635 of FIG. 6, depending on whether HE 505 of FIG. 5 is a symmetric or asymmetric encryption algorithm, to decrypt encrypted address list 630 of FIG. 6. If server 155 of FIG. 1 also used evaluation key 625 of FIG. 6 in using HE library 620 of FIG. 6, then device 135 of FIG. 1 may also use evaluation key 625 of FIG. 6 in decrypting encrypted address list 630 of FIG. 6.

At block 735, corresponding to step 7 of FIG. 6, device 135 of FIG. 1 may send decrypted address list 640 of FIG. 6 to server 155 of FIG. 1. Finally, at block 740, corresponding to step 8 of FIG. 6, server 155 of FIG. 1 may use decrypted address list 640 of FIG. 6 to update poison list 605 of FIG. 6 as stored in databases 610 of FIG. 6. Server 155 of FIG. 1 may also optionally distribute updated poison list 605 of FIG. 6 to machines 105 of FIG. 1, so that machines 105 of FIG. 1 know what addresses of device 135 of FIG. 1 should not be used.

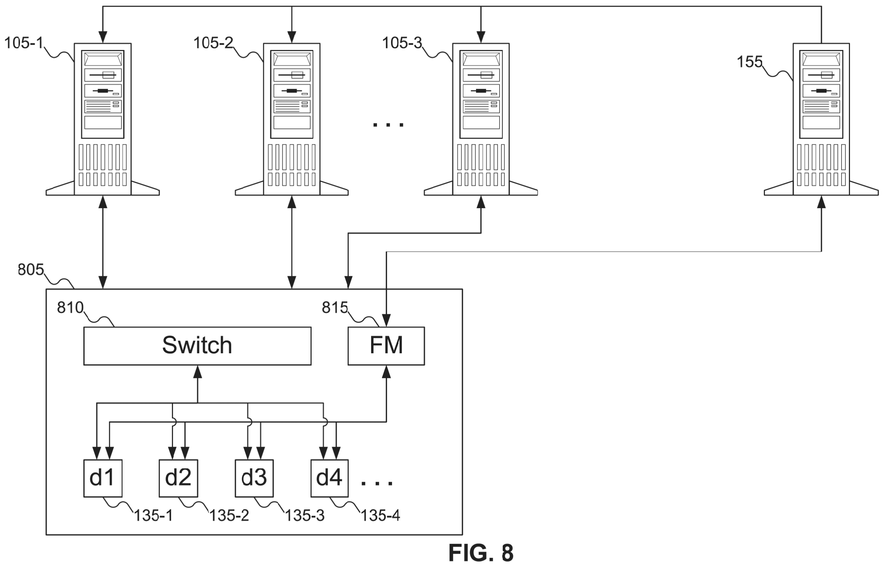

FIG. 8 shows an alternate implementation of device 135 of FIG. 1, according to embodiments of the disclosure. In the description of FIGs. 3 and 6, device 135 is suggested to be a single device that is not itself divisible. That is, device 135 may appear to machines 105 (and to server 155) as a single device. But in some embodiments of the disclosure, device 135 may be a combination of elements, each of which may be a separate device 135. Thus, for example, switch 805 may be a chassis that includes multiple devices 135, each of which may function as a separate device.

To achieve this implementation, switch 805 may include switching module 810, which may permit devices 135 to connect to machines 105. Machines 105 may send requests to switch 805, and switching module 810 may direct those requests to the individual devices 135. Switching module 810 may include a table (not shown in FIG. 8) that may map addresses as used by machines 105 to addresses used by devices 135. For example, consider the situation where each device 135 includes 4 gigabytes (GB) of memory. Normally, each device 135 would offer addresses that range from 0x0000 0000 0000 through 0x0000 FFFF FFFF: that is, the address ranges of devices 135 might overlap. If these addresses were exposed to machines 105 without modification, switching module 810 might not know to which device a particular request should be directed. To address this concern, switching module 810 may include a table that maps addresses from each device 135 into ranges that do not overlap. Thus, for example, switching module 810 might map addresses 0x0000 0000 0000 through 0x0000 FFFF FFFF of device 135-1 to addresses 0x0000 0000 0000 through 0x0000 FFFF FFFF, addresses 0x0000 0000 0000 through 0x0000 FFFF FFFF of device 135-2 to addresses 0x0001 0000 0000 through 0x0001 FFFF FFFF, and so on. In this manner, machines 105 might see a global address range of 0x0000 0000 0000 through 0x0003 FFFF FFFF (assuming four identical devices 135), and switching module 810 may know from the mapping table which device 135 includes the local address storing the data requested by machines 105. In the above example, switching module 810 might simply mask out the 16 high order bits to determine the local address of an individual device 135, with the 16^{th} high-order bit identifying the individual device 135 that stores the data.

More generally (where devices 135 might not store identically-sized address ranges), the mapping table may store the lowest global address associated with each individual device 135. The appropriate device 135 for any particular global address may then be identified as the device with the highest global address in the mapping table that is not larger than the given global address, and the appropriate local address may be calculated by subtracting that lowest global address from the given global address. (Assuming that the global address range is contiguous, then the highest address associated with a particular device 135 would be one value less the lowest address associated with the next device.) Switch may then identify the appropriate device 135 and the appropriate local address for that device 135. So, continuing the above example, switching module 810 may store a mapping table that maps an identifier of device 135-1 to global address 0x0000 0000 0000, an identifier of device 135-2 to global address 0x0001 0000 0000, and so on. Upon receiving a request with, say, global address 0x0002 0010 AAAA, the highest global address in the mapping table not larger than global address 0x0002 0010 AAAA would be 0x0002 0000 0000, which would identify device 135-3, and the corresponding local address would be 0x0002 0010 AAAA - 0x0002 0000 0000, or 0x0000 0010 AAAA.

In some embodiments of the disclosure, devices 135 may be individually accessible and addressable by machines 105; in other embodiments of the disclosure, machines 105 may send requests to switch 805, and it is up to switching module 810 to determine which device 135 those individual requests should be sent to. Switching module 810 may also potentially modify the requests to be appropriate to each individual device 135. For example, if devices 135 expose address ranges that overlap, switching module 810 may be responsible for mapping the address range of each device 135 to a portion of a non-overlapping address range exposed by switch 805 to machines 105, and to modify the requests sent to switch 805 based on the address ranges supported by each device 135.

As mentioned above, in some embodiments of the disclosure, switching module 810 may make it possible to directly address each device 135. For example, switching module 810 might be a virtual CXL switch that may support exposing each device 135. In such embodiments of the disclosure, switching module 810 may not need to do any mapping of requests from machines 105 (other than routing the requests to the appropriate devices 135).

In some embodiments of the disclosure, server 155 may also access devices 135 in switch 805 through switching module 810. But in other embodiments of the disclosure (which may include, for example, embodiments of the disclosure where devices 135 are not exposed by switch 805), server 155 may access devices 155 through fabric manager 815. Fabric manager 815 may control devices 135 in switch 805, and may deliver requests to the appropriate devices 135. For example, fabric manager 815 may support accessing mailboxes in devices 135, which is a function that machines 105 might not need.

A Fabric Management (FM) unit may support communication with one or more CXL devices either through Management Content Transport Platform (MCTP)-based CXL mailbox or custom CXL device drivers (FM-based mailbox) to facilitate access to the CXL mailboxes for each device.

The RAS system management unit may maintain any of several databases:
1. Homomorphic Encrypted CE Event Records: These records may store one or more encrypted correctable error events.
2. Poison List: A list of faulty or predicted faulty pages.
3. Normal Event Records: Records of regular, non-sensitive events.

These databases may be used for online UE prediction. The system may periodically check for updates from one or more CXL devices, or from all CXL devices, via their respective CXL mailboxes. If there is any update regarding UE prediction, the system may synchronize the FPL with the hosts in the memory pooling system.

Each host in the system may be equipped with a system-level RAS user daemon, which handles tasks such as faulty page management, online fault detection, and recovery. When a memory UE is reported, it may be processed by the daemon using event records, message signaled interrupts (MSI or MSI-X), or Advanced Error Reporting (AER). These reports may then be forwarded to the RAS system management unit for further processing.

For UE prediction, the RAS system management unit may communicate the updated FPL to each host. The host may then apply this information to a CXL Host Dynamic Memory (HDM) memory range within its system.

In summary, embodiments of the disclosure may support effective RAS management that may be provided at the system level in a CXL memory pooling architecture. The memory pooling architecture may ensure that correctable error data is securely managed via homomorphic encryption, preventing exposure to the hosts, while enabling comprehensive error prediction and management.

Embodiments of the disclosure may include a process for encrypting a DRAM event record in the case of a CE error. The process does not apply encryption to the common event record format, nor to the event record payloads for input and output. To safeguard the data, the CXL device may utilize homomorphic encryption (HE) through an embedded HE encryption hardware engine. The encryption process may be straightforward, involving the following three example steps:
1. Generation of a private key: A unique private key may be created to ensure that the data remains secure.
2. Encryption of each entry: Every entry within the DRAM event record may be encrypted using the private key, securing the sensitive information.
3. Storage of the encrypted data: An encrypted DRAM CE event record may then be stored in a CE record list buffer, making the event record available for future access by authorized users.

The length of each encrypted entry may vary, depending on the private key value which adds an extra layer of security. Once encrypted, the data may be transferred to a CXL RAS management unit via a get_ce_event_record CXL mailbox capability, where it may be securely processed and analyzed by authorized systems.

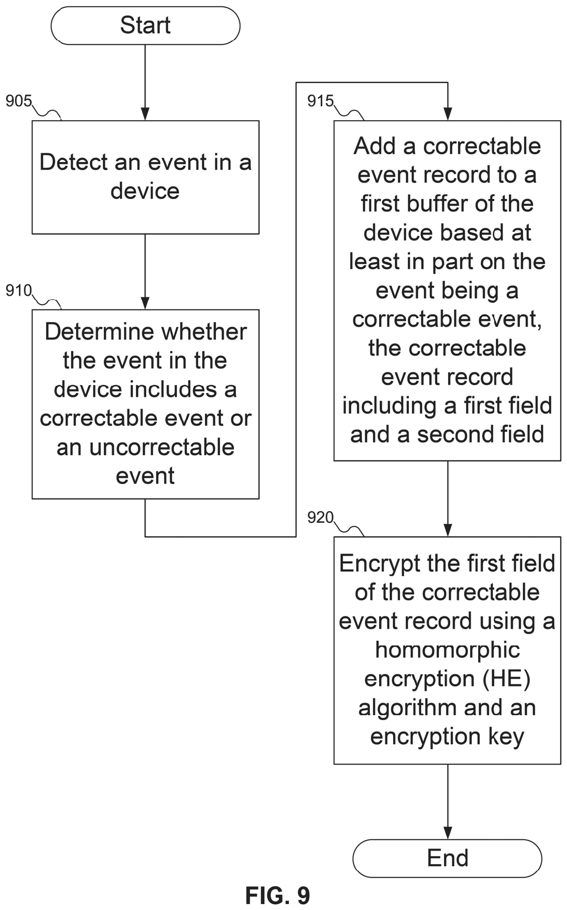

FIG. 9 shows a flowchart of an example procedure for device 135 of FIG. 1 to generate correctable event record 325 of FIG. 5, according to embodiments of the disclosure. In FIG. 9, at block 905, device 135 of FIG. 1 may detect an event occurring. At block 910, device 135 of FIG. 1 may determine whether the event is correctable or not. At block 915, device 135 of FIG. 1 may create correctable event record 325 and store it in buffer 315-2 of FIG. 3. Correctable event record 325 of FIG. 3, as shown in FIG. 5, may include various fields 515 of FIG. 5. Finally, at block 920, device 135 of FIG. 1 may encrypt a field 515 of FIG. 5 in correctable event record 325 of FIG. 3 using homomorphic encryption 505 and encryption key 510 of FIG. 5.

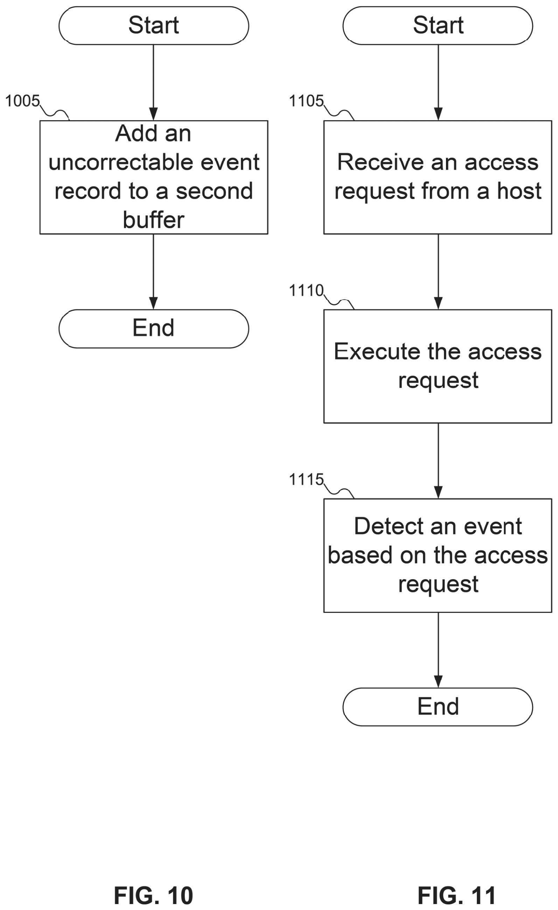

FIG. 9 does not reflect what happens if, at block 910, the event is not correctable. FIG. 10 shows a flowchart of an example procedure for device 135 of FIG. 1 to store uncorrectable event record 320 of FIG. 3, according to embodiments of the disclosure. In FIG. 10, at block 1005 of FIG. 10, device 135 of FIG. 1 may create uncorrectable event record 320 of FIG. 3 and may store it in buffer 315-1 of FIG. 3.

FIG. 11 shows a flowchart of an example procedure for device 135 of FIG. 1 to determine that an event has occurred, according to embodiments of the disclosure. In FIG. 11, at block 1105, device 135 of FIG. 1 may receive a request from machine 105 of FIG. 1. This request may be, for example, a request to access data-read the data, write the data, or delete the data-from device 135 of FIG. 1. At block 1110, device 135 of FIG. 1 may execute the request. Finally, at block 1115, device 135 of FIG. 1 may determine that an event has occurred based on executing the request.

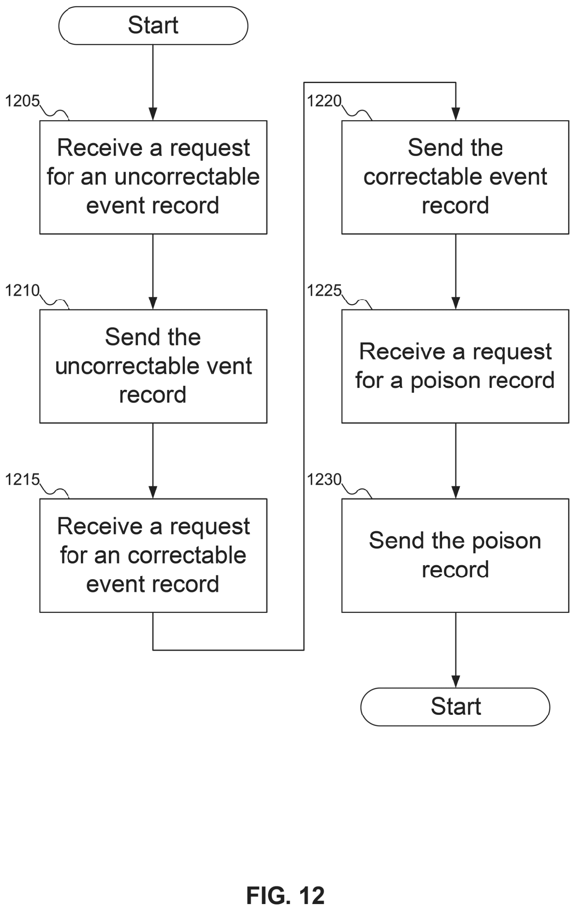

FIG. 12 shows a flowchart of an example procedure for device 135 of FIG. 1 to share event records with server 155 of FIG. 1, according to embodiments of the disclosure. In FIG. 12, at block 1205, device 135 of FIG. 1 may receive a request for uncorrectable event record 320 of FIG. 3 from server 155 of FIG. 1. This request may be received at device 135 of FIG. 1 using, for example, a mailbox interface. At block 1210, device 135 of FIG. 1 may return uncorrectable event record 320 of FIG. 3 to server 155 of FIG. 1, again potentially via a mailbox interface. At block 1215, device 135 of FIG. 1 may receive a request for correctable event record 325 of FIG. 3 from server 155 of FIG. 1. This request may be received at device 135 of FIG. 1 using, for example, a mailbox interface. At block 1220, device 135 of FIG. 1 may return correctable event record 325 of FIG. 3 to server 155 of FIG. 1, again potentially via a mailbox interface. At block 1225, device 135 of FIG. 1 may receive a request for poison list 605 of FIG. 6 from server 155 of FIG. 1. This request may be received at device 135 of FIG. 1 using, for example, a mailbox interface. At block 1230, device 135 of FIG. 1 may return poison list 605 of FIG. 6 to server 155 of FIG. 1, again potentially via a mailbox interface.

While FIG. 12 suggests that each record-uncorrectable event record 320 of FIG. 3, correctable event record 315 of FIG. 3, and poison list 605 of FIG. 6-may be requested separately, embodiments of the disclosure may include any desired combinations of requests. Thus, for example, block 1205 may represent server 155 of FIG. 1 requesting all (or a subset of) available uncorrectable event records 320 of FIG. 3, block 1215 may represent server 155 of FIG. 1 requesting all (or a subset of) available correctable event records 315 of FIG. 3, and block 1225 may represent server 155 of FIG. 1 requesting all (or a subset of) available poison lists 605 of FIG. 6. In such embodiments of the disclosure, the information returned from device 135 of FIG. 1 in blocks 1210, 1220, and 1230 to server 155 may correspond to the information requested. In addition, embodiments of the disclosure may include server 155 of FIG. 1 requesting multiple types of records at one time. Thus, for example, server 155 might issue just one request, asking for all uncorrectable event records 320 of FIG. 3, uncorrectable event records 315 of FIG. 3, and all poison lists 605 of FIG. 6, in which case device 135 may return all the requested information as part of one operation.

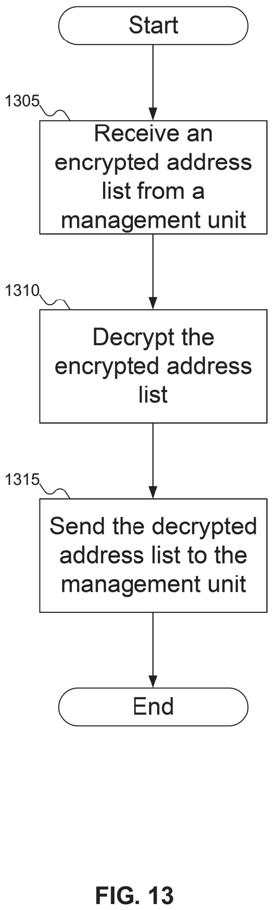

FIG. 13 shows a flowchart of an example procedure for device 135 of FIG. 1 to process encrypted address list 630 of FIG. 6 received from server 155 of FIG. 1, according to embodiments of the disclosure. In FIG. 13, at block 1305, device 135 of FIG. 1 may receive encrypted address list 630 of FIG. 6 from server 155 of FIG. 1. Device 135 of FIG. 1 may also receive evaluation key 625 of FIG. 6 from server 155 of FIG. 1. Device 135 of FIG. 1 may receive encrypted address list 630, and potentially evaluation key 625 of FIG. 6, from server 155 of FIG. 1 via a mailbox interface. At block 1310, device 135 of FIG. 1 may decrypt encrypted address list 630 of FIG. 6. Device 135 of FIG. 1 may use homomorphic algorithm 505 and encryption key 510 of FIG. 5 to decrypt encrypted address list 630 of FIG. 6 to produce decrypted address list 640 of FIG. 6; device 135 of FIG. 1 may also use evaluation key 625 of FIG. 6, if device 135 of FIG. 1 receives evaluation key 625 of FIG. 6 from server 155 of FIG. 1. Finally, at block 1315, device 135 of FIG. 1 may send decrypted address list 640 of FIG. 6 back to server 155 of FIG. 1, again potentially via a mailbox interface.

Embodiments of the disclosure may include an example of UE prediction based on accumulated event data in the CXL management system database. The database, which stores HE data, may use an HE library for the calculation of prediction algorithms, such as log-based, pattern matching, and machine learning (ML) methods. These algorithms may generate evaluation keys to protect the secret key and ensure the privacy of the data.

The evaluation key and the predicted Device Physical Address (DPA) may then be returned to a target CXL device via the get_decrypted_DPA vendor-specific CXL mailbox capability. Upon receiving these parameters, an HE hardware engine within the target CXL device may decrypt the DPA and send the decrypted DPA back to the CXL management system, which may function as an RAS management unit, through the get_decrypted_DPA payload-out.

As a result, the CXL management system may only be informed of the predicted DPA for uncorrectable errors, without ever storing or decrypting the actual CE events. The decrypted DPA may be treated as a "poison" by the CXL management system, which may function as a CXL memory pooling system. The decrypted DPA may then be added to the poison list in the database.

Finally, the CXL management system may update all hosts with a Faulty Page List (FPL) format, which contains a list of potentially faulty memory pages. Each host, through its system-level RAS user daemon, may translate the DPAs to Host Physical Addresses (HPAs) according to the host's memory address mapping. This approach allows the daemon to take the necessary action by offlining one or more target pages that are predicted to be faulty.

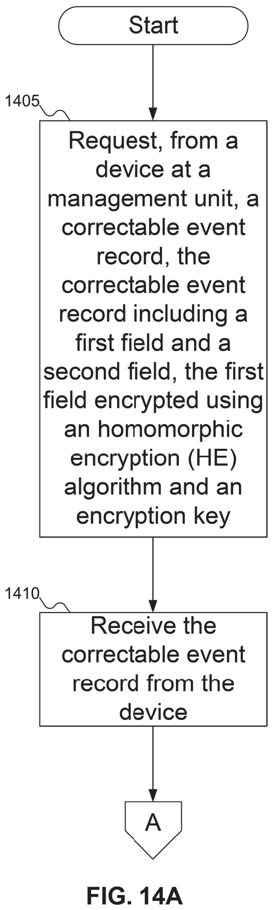

FIGs. 14A-14B show a flowchart of an example procedure for server 155 of FIG. 1 to request and process correctable event record 325 of FIG. 5 from device 135 of FIG. 1, according to embodiments of the disclosure. In FIG. 14A, at block 1405, server 155 of FIG. 1 may request correctable event record 325 of FIG. 3 from device 135 of FIG. 1, which may include a field that has been encrypted using homomorphic encryption 505 and encryption key 510 of FIG. 5. Server 155 of FIG. 1 may request correctable event record 325 of FIG. 3 from device 135 of FIG. 1 using, for example, a mailbox interface. At block 1410, server 155 of FIG. 1 may receive correctable event record 325 of FIG. 3 from device 135 of FIG. 1, again potentially using a mailbox interface. As discussed with reference to FIG. 6 above, server 155 of FIG. 1 may receive correctable event record 325 of FIG. 3 without receiving encryption key 510, and therefore may not be able to decrypt correctable event record 325 of FIG. 3.

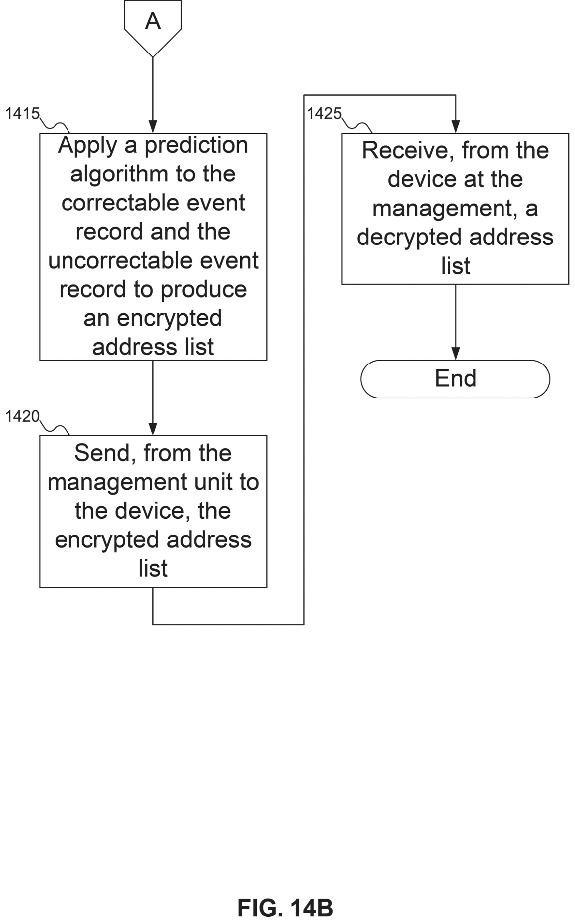

At block 1415 (FIG. 14B), server 155 of FIG. 1 may use prediction algorithm 615 of FIG. 6 to make a prediction regarding future events in device 135 of FIG. 1. Server 155 of FIG. 1 may prediction algorithm 615 of FIG. 6 with correctable event record 315 of FIG. 3 and uncorrectable event record 320 of FIG. 3.

The result of prediction algorithm 615 of FIG. 6 may include encrypted address list 630 of FIG. 6. At block 1420, management unit 125 of FIG. 1 may send encrypted address list 630 of FIG. 6 to device 135 of FIG. 1. Server 155 of FIG. 1 may also send evaluation key 625 of FIG. 6 to device 135 of FIG. 1, if server 155 of FIG. 1 has used evaluation key 625 of FIG. 6. Finally, at block 1425, server 155 of FIG. 1 may receive decrypted address list 640 of FIG. 6 from device 120 of FIG. 1.

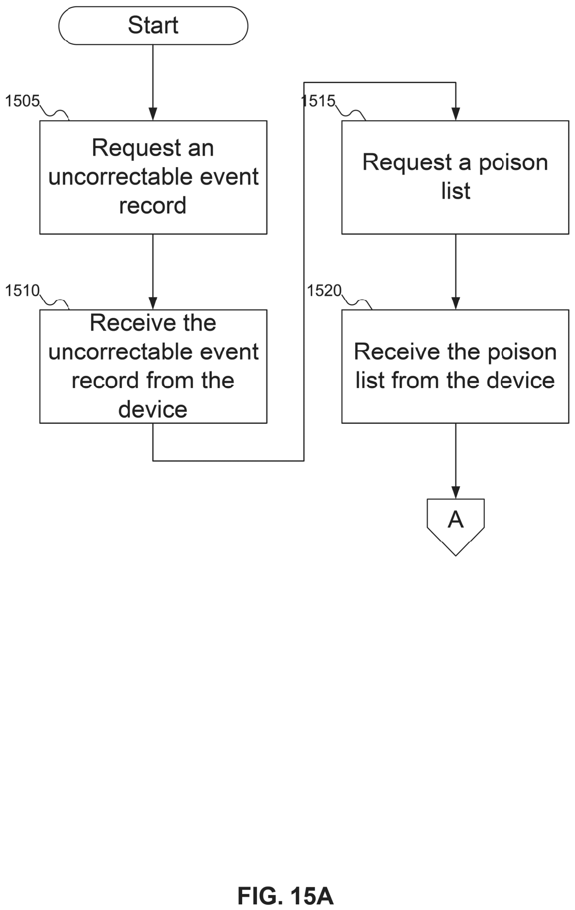

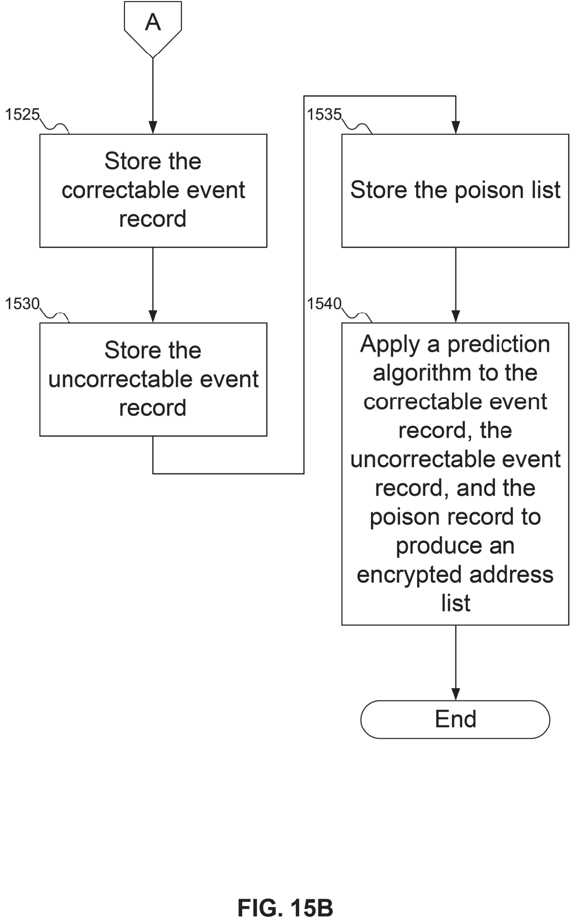

FIGs. 15-15B show a flowchart of an example procedure for server 155 of FIG. 1 to request and store event records from device 135 of FIG. 1, according to embodiments of the disclosure. In FIG. 15A, at block 1505, server 155 of FIG. 1 may request uncorrectable event record 320 of FIG. 3 from device 135 of FIG. 1. Server 155 of FIG. 1 may request uncorrectable event record 320 of FIG. 3 from device 135 of FIG. 1 using, for example, a mailbox interface. At block 1510, server 155 of FIG. 1 may receive uncorrectable event record 320 of FIG. 3 from device 135 of FIG. 1, again potentially using a mailbox interface.

At block 1515, server 155 of FIG. 1 may request poison list 605 of FIG. 6 from device 135 of FIG. 1. Server 155 of FIG. 1 may request poison list 605 of FIG. 6 from device 135 of FIG. 1 using, for example, a mailbox interface. At block 1520, server 155 of FIG. 1 may receive poison list 605 of FIG. 6 from device 135 of FIG. 1, again potentially using a mailbox interface.

At block 1525 (FIG. 15B), server 155 of FIG. 1 may store correctable event record 325 of FIG. 3 in database 610 of FIG. 6, at block 1530, server 155 of FIG. 1 may store uncorrectable event record 320 of FIG. 3 in database 610. At block 1535, server 155 of FIG. 1 may store poison list 605 of FIG. 6 in database 610 of FIG. 6. Finally, at block 1540, server may use prediction algorithm 615 of FIG. 6 to make a prediction regarding future events in device 135 of FIG. 1. Server 155 of FIG. 1 may prediction algorithm 615 of FIG. 6 with correctable event record 315 of FIG. 3, uncorrectable event record 320 of FIG. 3, and poison list 605 of FIG. 6.

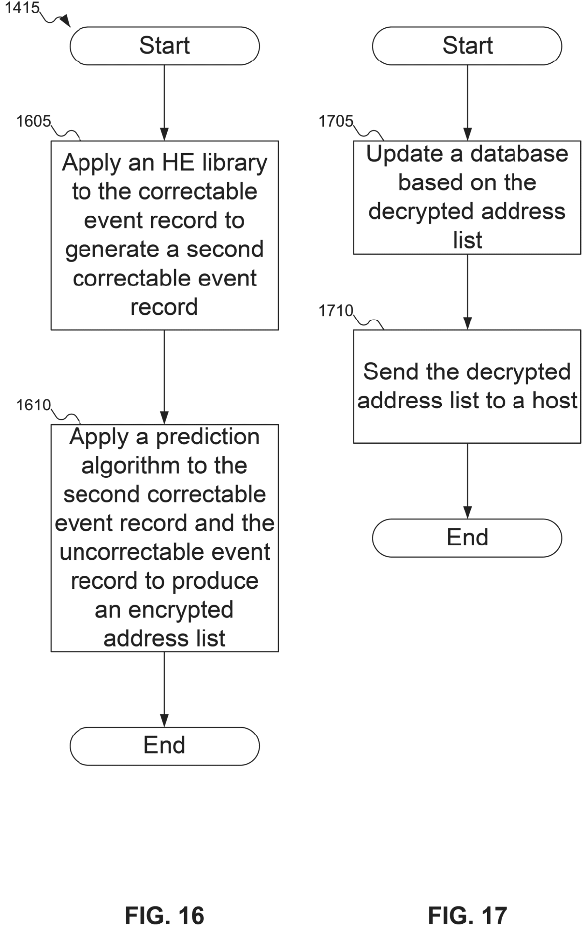

FIG. 16 shows a flowchart of an example procedure for server 155 of FIG. 1 to process correctable event record 325 of FIG. 5, according to embodiments of the disclosure. In FIG. 16, at block 1605, server 155 of FIG. 1 may apply HE library 620 of FIG. 6 (in conjunction with evaluation key 625 of FIG. 6) in processing correctable event record 325 of FIG. 3. HE library 620 of FIG. 6 may be a library of functions that may be used with encrypted data (which may be encrypted using a homomorphic encryption algorithm, and thus the results of applying such mathematical operations may be decryptable) to manipulate correctable event record 325 of FIG. 3. Note that since uncorrectable event records 320 of FIG. 3 (and poison list 605 of FIG. 6, if also used) may be unencrypted, and therefore might be used by prediction algorithm 615 of FIG. 6 without also using HE library 620 of FIG. 6. In using HE library 620 and evaluation key 625 of FIG. 6, server 155 of FIG. 1 might modify correctable event record 325 of FIG. 3, thereby generating a different correctable event record 325 of FIG. 3. At block 1610, prediction algorithm 615 of FIG. 6 may use this different correctable event record 325 of FIG. 3, rather than correctable event record 325 of FIG. 3 as received from device 135 of FIG. 1.

FIG. 17 shows a flowchart of an example procedure for server 155 of FIG. 1 to update database 610 of FIG. 6 based on a decrypted address list received from device 135 of FIG. 1, according to embodiments of the disclosure. In FIG. 17, at block 1705, server 155 of FIG. 1 may update database 610 of FIG. 6 based on decrypted address list 640 of FIG. 6 (which may be treated as a new poison list 605 of FIG. 6). Finally, at block 1710, server 155 of FIG. 1 may propagate this update to database 610 of FIG. 6 to machines 105 of FIG. 1.

In FIGs. 9-17, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Embodiments of the disclosure include a device that may encrypt correctable event records using a homomorphic encryption algorithm and an encryption key that is local to the device. The encrypted correctable event records may be shared with an RAS server to make predictions about addresses in the device that might become faulty in the future. Because the correctable event records are encrypted using a homomorphic encryption algorithm, the correctable event records may be used by the prediction algorithm by the RAS server by including a homomorphic encryption library that may offer mathematical operations on the encrypted correctable event records without decrypting the correctable event records. By enabling the RAS server to make predictions about addresses in the device that might become faulty in the future but without exposing the data of the correctable event records, the device offers a technical improvement, enabling the device vendors to protect any proprietary technology or data even though the RAS server may still make predictions about the device.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, *e.g.,* RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Having described and illustrated the principles of the disclosure with reference to illustrated embodiments, it will be recognized that the illustrated embodiments may be modified in arrangement and detail without departing from such principles, and may be combined in any desired manner. And, although the foregoing discussion has focused on particular embodiments, other configurations are contemplated. In particular, even though expressions such as "according to an embodiment of the disclosure" or the like are used herein, these phrases are meant to generally reference embodiment possibilities, and are not intended to limit the disclosure to particular embodiment configurations. As used herein, these terms may reference the same or different embodiments that are combinable into other embodiments.

The foregoing illustrative embodiments are not to be construed as limiting the disclosure thereof. Although a few embodiments have been described, those skilled in the art will readily appreciate that many modifications are possible to those embodiments without materially departing from the novel teachings and advantages of the present disclosure. Accordingly, all such modifications are intended to be included within the scope of this disclosure as defined in the claims.

Embodiments of the disclosure may extend to the following statements, without limitation:
Statement 1. An embodiment of the disclosure includes a device, comprising:
   a connection to a host or a management unit;
   a media to store a data;
   a controller to access the data in the media based at least in part on a request from the host;
   a buffer to store a correctable event record, the correctable event record including a first field and a second field, the first field encrypted using a homomorphic encryption (HE) algorithm and an encryption key; and
   an HE engine to encrypt the first field in the correctable event record using the HE algorithm,
   wherein the management unit is configured to predict an uncorrectable error at an address in the media based at least in part on the correctable event record, and
   wherein the encryption key is local to the device.
Statement 2. An embodiment of the disclosure includes the device according to statement 1, wherein the device includes a cache-coherent interconnect device.
Statement 3. An embodiment of the disclosure includes the device according to statement 2, wherein the cache-coherent interconnect device includes a Compute Express Link (CXL) device.
Statement 4. An embodiment of the disclosure includes the device according to statement 1, wherein the connection includes the connection to a switch, the switch including a second connection to the host and a third connection to the management unit.
Statement 5. An embodiment of the disclosure includes the device according to statement 4, wherein the switch includes a cache-coherent interconnect switch.
Statement 6. An embodiment of the disclosure includes the device according to statement 5, wherein the cache-coherent interconnect switch includes a Compute Express Link (CXL) switch.
Statement 7. An embodiment of the disclosure includes the device according to statement 1, wherein the management unit includes a Reliability, Availability, and Serviceability (RAS) management unit.
Statement 8. An embodiment of the disclosure includes the device according to statement 1, wherein the device is configured to receive an encrypted address list from the management unit, to decrypt the encrypted address list to produce a decrypted address list, and to return the decrypted address list to the management unit.
Statement 9. An embodiment of the disclosure includes the device according to statement 8, wherein:
   the encrypted address list includes an encrypted device physical address (DPA) list; and
   the decrypted address list includes a decrypted DPA list.
Statement 10. An embodiment of the disclosure includes the device according to statement 8, wherein the device is further configured to receive the encrypted address list and an evaluation key from the management unit and to decrypt the encrypted address list to produce the decrypted address list using the encryption key and the evaluation key.
Statement 11. An embodiment of the disclosure includes the device according to statement 8, wherein the device is further configured to receive the encrypted address list and an evaluation key from the management unit and to decrypt the encrypted address list to produce the decrypted address list using a decryption key and the evaluation key, the decryption key associated with the encryption key.
Statement 12. An embodiment of the disclosure includes the device according to statement 8, further comprising a mailbox to communicate with the management unit about the encrypted address list and the decrypted address list.
Statement 13. An embodiment of the disclosure includes the device according to statement 12, wherein the mailbox includes a mailbox interface.
Statement 14. An embodiment of the disclosure includes the device according to statement 13, wherein the mailbox interface is a vendor-specific mailbox interface.
Statement 15. An embodiment of the disclosure includes the device according to statement 13, wherein the device is configured to receive from the management unit the encrypted address list using the mailbox interface.
Statement 16. An embodiment of the disclosure includes the device according to statement 15, wherein the device is further configured to receive from the management unit an evaluation key using the mailbox interface.
Statement 17. An embodiment of the disclosure includes the device according to statement 13, wherein the device is configured to provide the decrypted address list to the management unit using the mailbox interface.
Statement 18. An embodiment of the disclosure includes the device according to statement 1, wherein the correctable event record is generated based at least in part on a correctable event occurring in the device.
Statement 19. An embodiment of the disclosure includes the device according to statement 1, wherein the first field includes a vendor-specific data field.
Statement 20. An embodiment of the disclosure includes the device according to statement 1, wherein the second field is not encrypted using the HE algorithm.
Statement 21. An embodiment of the disclosure includes the device according to statement 1, further comprising a mailbox to communicate with the management unit regarding the correctable event record.
Statement 22. An embodiment of the disclosure includes the device according to statement 21, further comprising a second buffer to store an uncorrectable event record.
Statement 23. An embodiment of the disclosure includes the device according to statement 21, further comprising a second mailbox to communicate with the management unit regarding the uncorrectable event record.
Statement 24. An embodiment of the disclosure includes the device according to statement 23, wherein the second mailbox includes a mailbox interface.
Statement 25. An embodiment of the disclosure includes the device according to statement 24, wherein the second mailbox interface is a vendor-specific mailbox interface.
Statement 26. An embodiment of the disclosure includes the device according to statement 21, further comprising a second mailbox to communicate with the management unit regarding a poison list.
Statement 27. An embodiment of the disclosure includes the device according to statement 26, wherein the second mailbox includes a mailbox interface.
Statement 28. An embodiment of the disclosure includes the device according to statement 27, wherein the second mailbox interface is a vendor-specific mailbox interface.
Statement 29. An embodiment of the disclosure includes the device according to statement 21, wherein the mailbox includes a mailbox interface.
Statement 30. An embodiment of the disclosure includes the device according to statement 1, further comprising a fabric manager for communicating with the management unit.
Statement 31. An embodiment of the disclosure includes the device according to statement 30, further comprising a second connection to communicate with the management unit, the second connection using the fabric manager.
Statement 32. An embodiment of the disclosure includes the device according to statement 1, further comprising a third buffer to store a poison list.
Statement 33. An embodiment of the disclosure includes a management unit, comprising:
   a first database to store a first correctable event record of a device, the first correctable event record including a first field and a second field, the first field encrypted by the device using a homomorphic encryption and an encryption key;
   a homomorphic encryption library to apply operations to the first correctable event record to produce a second correctable event record; and
   a prediction algorithm to produce an encrypted address list based at least in part on the second correctable event record,
   wherein the encryption key is local to the device.
Statement 34. An embodiment of the disclosure includes the management unit according to statement 33, wherein the first database includes the second database.
Statement 35. An embodiment of the disclosure includes the management unit according to statement 33, wherein the prediction algorithm is configured to produce an encrypted address list based at least in part on the second correctable event record and an uncorrectable event record of the device.
Statement 36. An embodiment of the disclosure includes the management unit according to statement 35, further comprising a second database to store the uncorrectable event record of the device.
Statement 37. An embodiment of the disclosure includes the management unit according to statement 35, wherein the management unit is configured to request the uncorrectable event record from the device.
Statement 38. An embodiment of the disclosure includes the management unit according to statement 37, wherein the management unit is configured to request the uncorrectable event record from a mailbox of the device.
Statement 39. An embodiment of the disclosure includes the management unit according to statement 38, wherein the management unit is configured to request the uncorrectable event record from a vendor-specific mailbox of the device.
Statement 40. An embodiment of the disclosure includes the management unit according to statement 33, further comprising a third database to store a poison list of the device.
Statement 41. An embodiment of the disclosure includes the management unit according to statement 40, wherein the prediction algorithm is configured to produce an encrypted address list based at least in part on the second correctable event record and the poison list.
Statement 42. An embodiment of the disclosure includes the management unit according to statement 33, wherein the management unit is configured to request the first correctable event record from the device.
Statement 43. An embodiment of the disclosure includes the management unit according to statement 42, wherein the management unit is configured to request the first correctable event record from a mailbox of the device.
Statement 44. An embodiment of the disclosure includes the management unit according to statement 43, wherein the management unit is configured to request the first correctable event record from a vendor-specific mailbox of the device.
Statement 45. An embodiment of the disclosure includes the management unit according to statement 33, wherein:
   the management unit further comprises an evaluation key; and
   the homomorphic encryption library is configured to apply operations to the first correctable event record using the evaluation key to produce the second correctable event record.
Statement 46. An embodiment of the disclosure includes the management unit according to statement 33, further comprising a transmitter to send the encrypted address list to the device.
Statement 47. An embodiment of the disclosure includes the management unit according to statement 46, further comprising a receiver receive a decrypted address list from the device.
Statement 48. An embodiment of the disclosure includes the management unit according to statement 47, wherein the management unit is configured to update a third database storing a poison list for the device based at least in part on the decrypted address list.
Statement 49. An embodiment of the disclosure includes the management unit according to statement 46, wherein the transmitter is configured to send requests for the correctable event record to the device.
Statement 50. An embodiment of the disclosure includes the management unit according to statement 46, wherein the transmitter is configured to send requests for an uncorrectable event record to the device.
Statement 51. An embodiment of the disclosure includes a method, comprising:
   detecting an event in a device;
   determining whether the event in the device includes a correctable event or an uncorrectable event;
   adding a correctable event record to a buffer of the device based at least in part on the event being a correctable event, the correctable event record including a first field and a second field; and
   encrypting the first field of the correctable event record using a homomorphic encryption (HE) algorithm and an encryption key,
   wherein the encryption key is local to the device.
Statement 52. An embodiment of the disclosure includes the method according to statement 51, wherein the first field of the correctable event record includes a vendor-specific data field.
Statement 53. An embodiment of the disclosure includes the method according to statement 51, wherein the second field of the correctable event record is not encrypted using the HE algorithm.
Statement 54. An embodiment of the disclosure includes the method according to statement 51, further comprising adding an uncorrectable event record to a second buffer of the device based at least in part on the event being an uncorrectable event.
Statement 55. An embodiment of the disclosure includes the method according to statement 51, wherein the device includes a cache-coherent interconnect device.
Statement 56. An embodiment of the disclosure includes the method according to statement 55, wherein the cache-coherent interconnect device includes a Compute Express Link (CXL) device.
Statement 57. An embodiment of the disclosure includes the method according to statement 51, wherein:
   the method further comprises:
      receiving, at the device, an access request from a host; and
      executing, at the device, the access request; and
   detecting the event in the device includes detecting the event in the device based at least in part on executing, at the device, the access request.
Statement 58. An embodiment of the disclosure includes the method according to statement 57, wherein receiving, at the device, the access request from the host includes receiving, at the device, the access request from the host via a switch, the switch connecting the device and the host.
Statement 59. An embodiment of the disclosure includes the method according to statement 58, wherein the switch includes a cache-coherent interconnect switch.
Statement 60. An embodiment of the disclosure includes the method according to statement 59, wherein the cache-coherent interconnect switch includes a Compute Express Link (CXL) switch.
Statement 61. An embodiment of the disclosure includes the method according to statement 58, wherein the switch connects the device, the host, and a management unit.
Statement 62. An embodiment of the disclosure includes the method according to statement 51, further comprising receiving, at the device, a request for the correctable event record from a management unit.
Statement 63. An embodiment of the disclosure includes the method according to statement 62, further comprising sending, from the device, the correctable event record to the management unit.
Statement 64. An embodiment of the disclosure includes the method according to statement 62, wherein receiving, at the device, the request for the correctable event record from the management unit includes receiving, at a mailbox at the device, the request for the correctable event record from the management unit.
Statement 65. An embodiment of the disclosure includes the method according to statement 64, wherein receiving, at the mailbox at the device, the request for the correctable event record from the management unit includes receiving, at a vendor-specific mailbox interface at the device, the request for the correctable event record from the management unit.
Statement 66. An embodiment of the disclosure includes the method according to statement 65, wherein receiving, at the mailbox at the device, the request for the correctable event record from the management unit includes receiving, at the mailbox at the device via a fabric manager, the request for the correctable event record from the management unit.
Statement 67. An embodiment of the disclosure includes the method according to statement 51, further comprising receiving, at the device, a request for an uncorrectable event record from the management unit.
Statement 68. An embodiment of the disclosure includes the method according to statement 67, further comprising sending, from the device, the uncorrectable event record to the management unit.
Statement 69. An embodiment of the disclosure includes the method according to statement 51, further comprising receiving, at the device, a request for a poison list from the management unit.
Statement 70. An embodiment of the disclosure includes the method according to statement 69, further comprising sending, from the device, the poison list to the management unit.
Statement 71. An embodiment of the disclosure includes the method according to statement 51, further comprising:
   receiving, at the device from a management unit, an encrypted address list;
   decrypting, at the device, using the HE algorithm and the encryption key, the encrypted address list to produce a decrypted address list; and
   sending, from the device to the management unit, the decrypted address list.
Statement 72. An embodiment of the disclosure includes the method according to statement 71, wherein:
   receiving, at the device from the management unit, an encrypted address list includes receiving, at the device from the management unit, an encrypted device physical address (DPA) list;
   decrypting, at the device, using the HE algorithm and the encryption key, the encrypted address list to produce the decrypted address list includes decrypting, at the device, using the HE algorithm and the encryption key, the encrypted DPA list to produce the decrypted DPA list; and
   sending, from the device to the management unit, the decrypted address list includes sending, from the device to the management unit, the decrypted DPA list.
Statement 73. An embodiment of the disclosure includes the method according to statement 71, wherein:
   receiving, at the device from the management unit, the encrypted address list includes receiving, at the device from the management unit, the encrypted address list and an evaluation key; and
   decrypting, at the device, using the HE algorithm and the encryption key, the encrypted address list to produce the decrypted address list includes decrypting, at the device, using the HE algorithm, the encryption key, and the evaluation key, the encrypted address list to produce the decrypted DPA list.
Statement 73. An embodiment of the disclosure includes a method, comprising:
   requesting, from a device at a management unit, a correctable event record, the correctable event record including a first field and a second field, the first field encrypted using an homomorphic encryption (HE) algorithm and an encryption key;
   receiving, from the device at the management unit, the correctable event record;
   applying, at the management unit, a prediction algorithm to the correctable event record to produce an encrypted address list;
   sending, from the management unit to the device, the encrypted address list; and
   receiving, from the device at the management unit, a decrypted address list,
   wherein the encryption key is local to the device.
Statement 74. An embodiment of the disclosure includes the method according to statement 73, wherein:
   applying, at the management unit, the prediction algorithm to the correctable event record to produce the encrypted address list includes applying, at the management unit, the prediction algorithm to the correctable event record to produce an encrypted device physical address (DPA) list;
   sending, from the management unit to the device, the encrypted address list includes sending, from the management unit to the device, the encrypted DPA list; and
   receiving, from the device at the management, the decrypted address list includes receiving, from the device at the management, a decrypted DPA list.
Statement 75. An embodiment of the disclosure includes the method according to statement 73, wherein requesting, from the device at the management unit, the correctable event record includes requesting, from a mailbox at the device at the management unit, the correctable event record.
Statement 76. An embodiment of the disclosure includes the method according to statement 75, wherein requesting, from the mailbox at the device at the management unit, the correctable event record includes requesting, from a vendor-specific mailbox interface at the device at the management unit, the correctable event record.
Statement 77. An embodiment of the disclosure includes the method according to statement 73, further comprising:
   requesting, from the device at the management unit, an uncorrectable event record; and
   receiving, from the device at the management unit, the uncorrectable event record.
Statement 78. An embodiment of the disclosure includes the method according to statement 77, wherein applying, at the management unit, the prediction algorithm to the correctable event record to produce the encrypted address list includes applying, at the management unit, the prediction algorithm to the correctable event record and the uncorrectable event record to produce the encrypted address list.
Statement 79. An embodiment of the disclosure includes the method according to statement 77, wherein applying, at the management unit, the prediction algorithm to the correctable event record and the uncorrectable event record to produce the encrypted address list includes applying, at the management unit, the prediction algorithm to the correctable event record and the uncorrectable event record to produce an encrypted device physical address (DPA) list.
Statement 80. An embodiment of the disclosure includes the method according to statement 77, wherein requesting, from the device at the management unit, the uncorrectable event record includes requesting, from a mailbox at the device at the management unit, the uncorrectable event record.
Statement 81. An embodiment of the disclosure includes the method according to statement 80, wherein requesting, from the mailbox at the device at the management unit, the uncorrectable event record includes requesting, from a vendor-specific mailbox interface at the device at the management unit, the uncorrectable event record.
Statement 82. An embodiment of the disclosure includes the method according to statement 77, further comprising storing, at the management unit, the uncorrectable event record
Statement 83. An embodiment of the disclosure includes the method according to statement 73, wherein:
   the method further comprises requesting, from the device at the management unit, a poison list; and
   applying, at the management unit, the prediction algorithm to the correctable event record to produce the encrypted address list includes applying, at the management unit, the prediction algorithm to the correctable event record and the poison list to produce the encrypted address list.
Statement 84. An embodiment of the disclosure includes the method according to statement 83, further comprising storing, at the management unit, the poison list.
Statement 85. An embodiment of the disclosure includes the method according to statement 73, further comprising storing, at the management unit, the correctable event record.
Statement 86. An embodiment of the disclosure includes the method according to statement 73, wherein applying, at the management unit, the prediction algorithm to the correctable event record to produce the encrypted address list includes:
   applying an HE library to the correctable event record to generate a second correctable event record; and
   applying, at the management unit, the prediction algorithm to the second correctable event record to produce the encrypted address list.
Statement 87. An embodiment of the disclosure includes the method according to statement 86, wherein applying the HE library to the correctable event record to generate the second correctable event record includes applying the HE library and an evaluation key to the correctable event record to generate the second correctable event record.
Statement 88. An embodiment of the disclosure includes the method according to statement 73, wherein sending, from the management unit to the device, the encrypted address list includes sending, from the management unit to the device, the encrypted address list and an evaluation key.
Statement 89. An embodiment of the disclosure includes the method according to statement 73, further comprising updating, at the management unit, a database based at least in part on the decrypted address list.
Statement 90. An embodiment of the disclosure includes the method according to statement 73, further comprising sending, from the management unit to a host, the decrypted address list.
Statement 91. An embodiment of the disclosure includes the method according to statement 73, wherein the prediction algorithm is a logarithmic base algorithm, a column/row analysis algorithm, a machine learning (ML) algorithm, or a large language model (LLM) algorithm.
Statement 93. An embodiment of the disclosure includes a system, comprising a non-transitory storage medium, the non-transitory storage medium having stored thereon instructions that, when executed by a machine, result in:
   detecting an event in a device;
   determining whether the event in the device includes a correctable event or an uncorrectable event;
   adding a correctable event record to a buffer of the device based at least in part on the event being a correctable event, the correctable event record including a first field and a second field; and
   encrypting the first field of the correctable event record using a homomorphic encryption (HE) algorithm and an encryption key,
   wherein the encryption key is local to the device.
Statement 94. An embodiment of the disclosure includes the system according to statement 93, wherein the first field of the correctable event record includes a vendor-specific data field.
Statement 95. An embodiment of the disclosure includes the system according to statement 93, wherein the second field of the correctable event record is not encrypted using the HE algorithm.
Statement 96. An embodiment of the disclosure includes the system according to statement 93, the non-transitory storage medium having stored thereon further instructions that, when executed by the machine, result in adding an uncorrectable event record to a second buffer of the device based at least in part on the event being an uncorrectable event.
Statement 97. An embodiment of the disclosure includes the system according to statement 93, wherein the device includes a cache-coherent interconnect device.
Statement 98. An embodiment of the disclosure includes the system according to statement 97, wherein the cache-coherent interconnect device includes a Compute Express Link (CXL) device.
Statement 99. An embodiment of the disclosure includes the system according to statement 93, wherein:
   the non-transitory storage medium has stored thereon further instructions that, when executed by the machine, result in:
      receiving, at the device, an access request from a host; and
      executing, at the device, the access request; and
   detecting the event in the device includes detecting the event in the device based at least in part on executing, at the device, the access request.
Statement 100. An embodiment of the disclosure includes the system according to statement 99, wherein receiving, at the device, the access request from the host includes receiving, at the device, the access request from the host via a switch, the switch connecting the device and the host.
Statement 101. An embodiment of the disclosure includes the system according to statement 100, wherein the switch includes a cache-coherent interconnect switch.
Statement 102. An embodiment of the disclosure includes the system according to statement 101, wherein the cache-coherent interconnect switch includes a Compute Express Link (CXL) switch.
Statement 103. An embodiment of the disclosure includes the system according to statement 100, wherein the switch connects the device, the host, and a management unit.
Statement 104. An embodiment of the disclosure includes the system according to statement 93, the non-transitory storage medium having stored thereon further instructions that, when executed by the machine, result in receiving, at the device, a request for the correctable event record from a management unit.
Statement 105. An embodiment of the disclosure includes the system according to statement 104, the non-transitory storage medium having stored thereon further instructions that, when executed by the machine, result in sending, from the device, the correctable event record to the management unit.
Statement 106. An embodiment of the disclosure includes the system according to statement 104, wherein receiving, at the device, the request for the correctable event record from the management unit includes receiving, at a mailbox at the device, the request for the correctable event record from the management unit.
Statement 107. An embodiment of the disclosure includes the system according to statement 106, wherein receiving, at the mailbox at the device, the request for the correctable event record from the management unit includes receiving, at a vendor-specific mailbox interface at the device, the request for the correctable event record from the management unit.
Statement 108. An embodiment of the disclosure includes the system according to statement 107, wherein receiving, at the mailbox at the device, the request for the correctable event record from the management unit includes receiving, at the mailbox at the device via a fabric manager, the request for the correctable event record from the management unit.
Statement 109. An embodiment of the disclosure includes the system according to statement 93, the non-transitory storage medium having stored thereon further instructions that, when executed by the machine, result in receiving, at the device, a request for an uncorrectable event record from the management unit.
Statement 110. An embodiment of the disclosure includes the system according to statement 109, the non-transitory storage medium having stored thereon further instructions that, when executed by the machine, result in sending, from the device, the uncorrectable event record to the management unit.
Statement 111. An embodiment of the disclosure includes the system according to statement 93, the non-transitory storage medium having stored thereon further instructions that, when executed by the machine, result in receiving, at the device, a request for a poison list from the management unit.
Statement 112. An embodiment of the disclosure includes the system according to statement 111, the non-transitory storage medium having stored thereon further instructions that, when executed by the machine, result in sending, from the device, the poison list to the management unit.
Statement 113. An embodiment of the disclosure includes the system according to statement 93, the non-transitory storage medium having stored thereon further instructions that, when executed by the machine, result in:
   receiving, at the device from a management unit, an encrypted address list;
   decrypting, at the device, using the HE algorithm and the encryption key, the encrypted address list to produce a decrypted address list; and
   sending, from the device to the management unit, the decrypted address list.
Statement 114. An embodiment of the disclosure includes the system according to statement 113, wherein:
   receiving, at the device from the management unit, an encrypted address list includes receiving, at the device from the management unit, an encrypted device physical address (DPA) list;
   decrypting, at the device, using the HE algorithm and the encryption key, the encrypted address list to produce the decrypted address list includes decrypting, at the device, using the HE algorithm and the encryption key, the encrypted DPA list to produce the decrypted DPA list; and
   sending, from the device to the management unit, the decrypted address list includes sending, from the device to the management unit, the decrypted DPA list.
Statement 115. An embodiment of the disclosure includes the system according to statement 113, wherein:
   receiving, at the device from the management unit, the encrypted address list includes receiving, at the device from the management unit, the encrypted address list and an evaluation key; and
   decrypting, at the device, using the HE algorithm and the encryption key, the encrypted address list to produce the decrypted address list includes decrypting, at the device, using the HE algorithm, the encryption key, and the evaluation key, the encrypted address list to produce the decrypted DPA list.
Statement 116. An embodiment of the disclosure includes a system, comprising a non-transitory storage medium, the non-transitory storage medium having stored thereon instructions that, when executed by a machine, result in:
   requesting, from a device at a management unit, a correctable event record, the correctable event record including a first field and a second field, the first field encrypted using an homomorphic encryption (HE) algorithm and an encryption key;
   receiving, from the device at the management unit, the correctable event record;
   applying, at the management unit, a prediction algorithm to the correctable event record to produce an encrypted address list;
   sending, from the management unit to the device, the encrypted address list; and
   receiving, from the device at the management unit, a decrypted address list,
   wherein the encryption key is local to the device.
Statement 117. An embodiment of the disclosure includes the system according to statement 116, wherein:
   applying, at the management unit, the prediction algorithm to the correctable event record to produce the encrypted address list includes applying, at the management unit, the prediction algorithm to the correctable event record to produce an encrypted device physical address (DPA) list;
   sending, from the management unit to the device, the encrypted address list includes sending, from the management unit to the device, the encrypted DPA list; and
   receiving, from the device at the management, the decrypted address list includes receiving, from the device at the management, a decrypted DPA list.
Statement 118. An embodiment of the disclosure includes the system according to statement 116, wherein requesting, from the device at the management unit, the correctable event record includes requesting, from a mailbox at the device at the management unit, the correctable event record.
Statement 119. An embodiment of the disclosure includes the system according to statement 118, wherein requesting, from the mailbox at the device at the management unit, the correctable event record includes requesting, from a vendor-specific mailbox interface at the device at the management unit, the correctable event record.
Statement 120. An embodiment of the disclosure includes the method according to statement 116, further comprising:
   requesting, from the device at the management unit, an uncorrectable event record; and
   receiving, from the device at the management unit, the uncorrectable event record.
Statement 121. An embodiment of the disclosure includes the method according to statement 120, wherein applying, at the management unit, the prediction algorithm to the correctable event record to produce the encrypted address list includes applying, at the management unit, the prediction algorithm to the correctable event record and the uncorrectable event record to produce the encrypted address list.
Statement 122. An embodiment of the disclosure includes the method according to statement 120, wherein applying, at the management unit, the prediction algorithm to the correctable event record and the uncorrectable event record to produce the encrypted address list includes applying, at the management unit, the prediction algorithm to the correctable event record and the uncorrectable event record to produce an encrypted device physical address (DPA) list.
Statement 123. An embodiment of the disclosure includes the system according to statement 120, wherein requesting, from the device at the management unit, the uncorrectable event record includes requesting, from a mailbox at the device at the management unit, the uncorrectable event record.
Statement 124. An embodiment of the disclosure includes the system according to statement 123, wherein requesting, from the mailbox at the device at the management unit, the uncorrectable event record includes requesting, from a vendor-specific mailbox interface at the device at the management unit, the uncorrectable event record.
Statement 125. An embodiment of the disclosure includes the method according to statement 120, further comprising storing, at the management unit, the uncorrectable event record
Statement 126. An embodiment of the disclosure includes the system according to statement 116, wherein:
   the non-transitory storage medium has stored thereon further instructions that, when executed by the machine, result in requesting, from the device at the management unit, a poison list; and
   applying, at the management unit, the prediction algorithm to the correctable event record to produce the encrypted address list includes applying, at the management unit, the prediction algorithm to the correctable event record and the poison list to produce the encrypted address list.
Statement 127. An embodiment of the disclosure includes the system according to statement 126, the non-transitory storage medium having stored thereon further instructions that, when executed by the machine, result in storing, at the management unit, the poison list.
Statement 128. An embodiment of the disclosure includes the system according to statement 116, the non-transitory storage medium having stored thereon further instructions that, when executed by the machine, result in storing, at the management unit, the correctable event record.
Statement 129. An embodiment of the disclosure includes the system according to statement 116, wherein applying, at the management unit, the prediction algorithm to the correctable event record to produce the encrypted address list includes:
   applying an HE library to the correctable event record to generate a second correctable event record; and
   applying, at the management unit, the prediction algorithm to the second correctable event record to produce the encrypted address list.
Statement 130. An embodiment of the disclosure includes the system according to statement 129, wherein applying the HE library to the correctable event record to generate the second correctable event record includes applying the HE library and an evaluation key to the correctable event record to generate the second correctable event record.
Statement 131. An embodiment of the disclosure includes the system according to statement 116, wherein sending, from the management unit to the device, the encrypted address list includes sending, from the management unit to the device, the encrypted address list and an evaluation key.
Statement 132. An embodiment of the disclosure includes the system according to statement 116, the non-transitory storage medium having stored thereon further instructions that, when executed by the machine, result in updating, at the management unit, a database based at least in part on the decrypted address list.
Statement 133. An embodiment of the disclosure includes the system according to statement 116, the non-transitory storage medium having stored thereon further instructions that, when executed by the machine, result in sending, from the management unit to a host, the decrypted address list.
Statement 134. An embodiment of the disclosure includes the system according to statement 116, wherein the prediction algorithm is a logarithmic base algorithm, a column/row analysis algorithm, a machine learning (ML) algorithm, or a large language model (LLM) algorithm.

## Claims

1. A device, comprising:
a connection to a host or a management unit;
a media to store a data;
a controller to access the data in the media based at least in part on a request from the host;
a buffer to store a correctable event record, the correctable event record including a first field and a second field, the first field encrypted using a homomorphic encryption, HE, algorithm and an encryption key; and
an HE engine to encrypt the first field in the correctable event record using the HE algorithm,
wherein the management unit is configured to predict an uncorrectable error at an address in the media based at least in part on the correctable event record, and
wherein the encryption key is local to the device.

2. The device according to claim 1, wherein the device includes a Compute Express Link, CXL, device.

3. The device according to claim 1 or 2, further comprising a mailbox to communicate with the management unit regarding the correctable event record.

4. The device according to any one of claims 1 to 3, further comprising a second buffer to store an uncorrectable event record.

5. A method, comprising:
detecting an event in a device;
determining whether the event in the device includes a correctable event or an uncorrectable event;
adding a correctable event record to a buffer of the device based at least in part on the event being a correctable event, the correctable event record including a first field and a second field; and
encrypting the first field of the correctable event record using a homomorphic encryption, HE, algorithm and an encryption key,
wherein the encryption key is local to the device.

6. The method according to claim 5, wherein:
the method further comprises:
receiving, at the device, an access request from a host; and
executing, at the device, the access request; and
detecting the event in the device includes detecting the event in the device based at least in part on executing, at the device, the access request.

7. The method according to claim 5 or 6, further comprising:
receiving, at a mailbox at the device, a request for the correctable event record from a management unit; and
sending, from the mailbox at the device, the correctable event record to the management unit.

8. The method according to claim 5 or 6, further comprising:
receiving, at the device from a management unit, an encrypted device address list;
decrypting, at the device, using the HE algorithm and the encryption key, the encrypted address list to produce a decrypted address list; and
sending, from the device to the management unit, the decrypted address list.

9. The method according to claim 5 or 6, further comprising:
receiving, at the device from a management unit, an encrypted device address list and an evaluation key;
decrypting, at the device, using the HE algorithm, the encryption key, and an evaluation key, the encrypted address list to produce a decrypted address list; and
sending, from the device to the management unit, the decrypted address list.

10. A method, comprising:
requesting, from a device at a management unit, a correctable event record, the correctable event record including a first field and a second field, the first field encrypted using an homomorphic encryption, HE, algorithm and an encryption key;
receiving, from the device at the management unit, the correctable event record;
applying, at the management unit, a prediction algorithm to the correctable event record to produce an encrypted address list;
sending, from the management unit to the device, the encrypted address list; and
receiving, from the device at the management unit, a decrypted address list,
wherein the encryption key is local to the device.

11. The method according to claim 10, wherein:
applying, at the management unit, the prediction algorithm to the correctable event record to produce the encrypted address list includes applying, at the management unit, the prediction algorithm to the correctable event record to produce an encrypted device physical address, DPA, list;
sending, from the management unit to the device, the encrypted address list includes sending, from the management unit to the device, the encrypted DPA list; and
receiving, from the device at the management, the decrypted address list includes receiving, from the device at the management, a decrypted DPA list.

12. The method according to claim 10 or 11, wherein requesting, from the device at the management unit, the correctable event record includes requesting, from a mailbox at the device at the management unit, the correctable event record.

13. The method according to any one of claims 10 to 12, further comprising:
requesting, from a mailbox at the device at the management unit, an uncorrectable event record; and
receiving, from the device at the management unit, the uncorrectable event record.

14. The method according to any one of claims 10 to 13, wherein:
the method further comprises requesting, from the device at the management unit, a poison list; and
applying, at the management unit, the prediction algorithm to the correctable event record to produce the encrypted address list includes applying, at the management unit, the prediction algorithm to the correctable event record and the poison list to produce the encrypted address list.

15. The method according to any one of claims 10 to 14, further comprising storing, at the management unit, the correctable event record.
